# EUROPEAN PATENT APPLICATION

(11) **EP 4 730 864 A1**
(43) Date of publication of application: **22.04.2026**
(21) Application number: 24842246.1
(22) Date of filing: 09.07.2024
(51) Int. Cl.: H04W 36/00

(54) **COMMUNICATION METHOD AND RELATED PRODUCT**

(30) Priority: 19.07.2023 CN 202310892488
(71) Applicant: Huawei Technologies Co., Ltd., Shenzhen, Guangdong 518129 (CN)
(72) Inventor: WANG, Fanfan, Shenzhen, Guangdong 518129 (CN); HU, Xingxing, Shenzhen, Guangdong 518129 (CN)
(74) Representative: Goddar, Heinz J.
(86) International application number: PCT/CN2024/104485
(87) International publication number: WO 2025/016251

(57) **Abstract**

Embodiments of this application disclose a communication method and a related product. The method includes: receiving first information from a distributed unit (distributed unit, DU), where the first information indicates that a terminal device is to access a target cell; and when a first condition is satisfied, stopping collecting user history information (UE history information, UHI) of the terminal device in a source cell, and/or collecting UHI of the terminal device in the target cell, where the source cell is a cell the terminal device accesses before the target cell. The first condition includes at least one of the following: The first information is received; and second information is received, where the second information indicates that the terminal device successfully accesses the target cell. In this way, a network side (for example, a CU) can obtain and use accurate UHI.

## Description

This application claims priority to Chinese Patent Application No. 202310892488.2, filed with the China National Intellectual Property Administration on July 19, 2023 and entitled "COMMUNICATION METHOD AND RELATED PRODUCT", which is incorporated herein by reference in its entirety.

### TECHNICAL FIELD

This application relates to the communication field, and in particular, to a communication method and a related product.

### BACKGROUND

In a wireless network, one user equipment (user equipment, UE) may communicate with a plurality of base stations, that is, dual connectivity (dual connectivity, DC), which is also referred to as multi-radio dual connectivity or multi-radio dual connectivity (multi-radio dual connectivity, MR-DC). A network side may provide a communication service for the UE by using resources of the plurality of base stations, to provide high-rate transmission for the UE. In an MR-DC scenario, a base station that performs control plane signaling interaction with a core network is referred to as a primary base station (master node, MN), and another base station is referred to as a secondary base station (secondary node, SN). In the MR-DC scenario, there is one primary cell (primary cell, PCell) in the primary base station, and there is one primary secondary cell (primary secondary cell, PSCell) in the secondary base station.

The primary cell is deployed on a primary frequency, in other words, the primary cell works on a primary carrier. The UE initiates an initial connection setup process or a connection reestablishment process in the primary cell. The primary secondary cell is a cell in which the UE initiates a random access procedure on the secondary base station, or a cell in which the UE skips a random access procedure and initiates data transmission in a change process of the secondary base station, or a cell of the secondary base station in which the UE initiates random access in a process of performing synchronous reconfiguration.

User history information (UE history information, UHI) includes historical mobility information of a user in the PCell and the PSCell. The historical mobility information includes a series of pieces of related information about a cell previously accessed by the user, for example, cell identifier information and duration in which the UE camps on the cell.

The user history information is recorded on a UE side and the network side separately, and is used for mobility parameter optimization, for example, selecting a proper target cell and detecting a ping-pong event, or may be used for cell traffic prediction and mobility prediction. The UE side and the network side record a limited quantity of entries of previously accessed cells. If the quantity exceeds a maximum amount of data, an earliest entry is deleted first.

### SUMMARY

Embodiments of this application disclose a communication method and a related product, so that a network side can obtain and use accurate UHI.

According to a first aspect, an embodiment of this application provides a communication method. The method includes: receiving first information from a distributed unit (distributed unit, DU), where the first information indicates that a terminal device is to access a target cell; and when a first condition is satisfied, stopping collecting user history information (UE history information, UHI) of the terminal device in a source cell, and/or collecting UHI of the terminal device in the target cell, where the source cell is a cell the terminal device accesses before the target cell. The first condition includes at least one of the following: The first information is received; and second information is received, where the second information indicates that the terminal device successfully accesses the target cell.

In this embodiment of this application, when the first condition is satisfied, collecting the UHI of the terminal device in the source cell is stopped, and/or the UHI of the terminal device in the target cell is collected. In this way, a network side (that is, a CU) can obtain and use accurate UHI.

In a possible implementation, the second information is carried in a first message, the first message is sent to a target central unit (central unit, CU) by a target DU accessed by the terminal device, and the target CU is a CU to which the target cell belongs; or the second information is carried in a second message, and the second message is a radio resource control (radio resource control, RRC) reconfiguration complete message sent by the terminal device. The central unit may be referred to as a central unit for short.

In this implementation, the second information is carried in the first message or the second message, and collecting the UHI in the source cell may be stopped in a timely manner, and/or the UHI of the terminal device in the target cell may be collected in a timely manner. In this way, the network side (that is, the CU) can obtain and use accurate UHI.

In a possible implementation, the first information indicates that layer 1/layer 2-triggered mobility information indicating that the terminal device changes to the target cell has been sent to the terminal device.

According to a second aspect, an embodiment of this application provides another communication method. The method includes: receiving first information from a DU, where the first information indicates that a terminal device is to access a target cell; when the first information is received, sending UHI to a target CU to which the target cell belongs, where a source CU of the terminal device is different from the target CU, and/or sending third information to a candidate CU to which a candidate cell of the terminal device belongs, where the third information indicates layer 1/layer 2-triggered information indicating the target cell to which the terminal device changes, and the source CU of the terminal device is different from the candidate CU.

In this embodiment of this application, when receiving the first information, the first CU sends the UHI to the target CU to which the target cell belongs, and/or the first CU sends the third information to the candidate CU to which the candidate cell of the terminal device belongs. In this way, a network side (after the candidate CU becomes the target CU) can obtain and use accurate UHI.

In a possible implementation, the first information indicates that layer 1/layer 2-triggered mobility information indicating that the terminal device changes to the target cell has been sent to the terminal device.

According to a third aspect, an embodiment of this application provides another communication method. The method includes: receiving third information, where the third information indicates layer 1/layer 2-triggered information indicating a target cell to which a terminal device changes; and when the third information is received, stopping collecting UHI of the terminal device in a source cell, and/or starting to collect UHI of the terminal device in the target cell, where the source cell is a cell the terminal device accesses before the target cell.

In this embodiment of this application, when the third information is received, collecting the UHI of the terminal device in the source cell is stopped, and/or collecting the UHI of the terminal device in the target cell is started. In this way, a network side can obtain and use accurate UHI.

According to a fourth aspect, an embodiment of this application provides another communication method. The method includes: receiving second information, where the second information indicates that a terminal device successfully accesses a target cell; and when the second information is received, stopping collecting UHI of the terminal device in a source cell, and/or collecting UHI of the terminal device in the target cell.

In this embodiment of this application, when the second information is received, the UHI of the terminal device in the target cell is collected. In this way, the UHI of the terminal device in the target cell can be collected in a timely manner.

In a possible implementation, the second information is carried in a first message, the first message is sent to a target CU by a target DU accessed by the target cell, and the target CU is a CU to which the target cell belongs; or the second information is carried in a second message, and the second message is an RRC reconfiguration complete message sent by the terminal device.

In a possible implementation, the method is applied to the target CU, and the target CU is different from a CU of a source cell the terminal device accesses before the target cell.

According to a fifth aspect, an embodiment of this application provides another communication method. The method includes: when fourth information is received, stopping collecting UHI of a terminal device in a source primary secondary cell, and/or collecting UHI of the terminal device in a target primary secondary cell, where the fourth information indicates the target primary secondary cell that satisfies a condition and that is selected by the terminal device; and sending UHI of the terminal device to a target secondary node.

In this embodiment of this application, when the fourth information is received, collecting the UHI of the terminal device in the source primary secondary cell is stopped, and/or the UHI of the terminal device in the target primary secondary cell is collected. In this way, the UHI of the terminal device in the target primary secondary cell can be collected in a timely manner, and collecting the UHI of the terminal device in the source primary secondary cell can be stopped in a timely manner.

According to a sixth aspect, an embodiment of this application provides another communication method. The method includes: when fourth information is received, sending fifth information to one or more candidate secondary nodes, where the fourth information indicates the target primary secondary cell that satisfies a condition and that is selected by a terminal device, the fifth information indicates the target primary secondary cell that satisfies the condition and that is selected by the terminal device, and the target primary secondary cell is one of at least one candidate primary secondary cell indicated to the terminal device.

In this embodiment of this application, the fifth information is sent to the one or more candidate secondary nodes, so that a candidate CU accurately records UHI of the terminal device in a primary secondary cell. After the terminal device accesses the candidate CU, the candidate CU can use accurate UHI in the primary secondary cell.

According to a seventh aspect, an embodiment of this application provides another communication method. The method includes: receiving fifth information from a master node; and when the fifth information is received, stopping collecting UHI of a terminal device in a source primary secondary cell, and/or collecting UHI of the terminal device in a target primary secondary cell, where the fifth information indicates the target primary secondary cell that satisfies a condition and that is selected by the terminal device, and the source primary secondary cell is a primary secondary cell the terminal device accesses before the target primary secondary cell.

In this embodiment of this application, when the fifth information is received, collecting the UHI of the terminal device in the source primary secondary cell is stopped, and/or the UHI of the terminal device in the target primary secondary cell is collected. In this way, a candidate CU can accurately record the UHI of the terminal device in the primary secondary cell. After the terminal device accesses the candidate CU, the candidate CU can use accurate UHI in the primary secondary cell.

According to an eighth aspect, an embodiment of this application provides another communication method. The method includes: after sixth information is received, sending UHI of a terminal device in a source primary secondary cell to a master node of the terminal device, and/or sending UHI of the terminal device in a primary secondary cell to a target secondary node of the terminal device, where the sixth information indicates a source secondary node of the terminal device to stop providing user data for the terminal device.

In this embodiment of this application, after the sixth information is received, the UHI of the terminal device in the primary secondary cell is sent to the master node, or the UHI of the terminal device in the primary secondary cell is sent to the target secondary node. In this way, the target secondary node can obtain the UHI of the terminal device in the primary secondary cell.

In a possible implementation, the sending the UHI of the terminal device in the primary secondary cell to the master node of the terminal device includes: sending the UHI of the terminal device in the primary secondary cell to the master node of the terminal device through a secondary node SN modification request procedure.

In a possible implementation, the sixth information includes identifier information of a target primary secondary cell that satisfies a condition and that is selected by the terminal device. The sending the UHI of the terminal device in the primary secondary cell to the target secondary node of the terminal device includes: sending, based on the identifier information of the target primary secondary cell, the UHI of the terminal device in the primary secondary cell to the target secondary node to which the target primary secondary cell belongs.

According to a ninth aspect, an embodiment of this application provides another communication method. The method includes: receiving UHI of a terminal device in a primary secondary cell from a source secondary node; and sending the UHI of the terminal device in the primary secondary cell to a target secondary node.

In this embodiment of this application, the target secondary node can obtain the UHI of the terminal device in the primary secondary cell.

In a possible implementation, before the UHI of the terminal device in the primary secondary cell is received from the source secondary node, the method further includes: sending sixth information to the source secondary node, where the sixth information indicates the source secondary node to stop providing user data for the terminal device.

According to a tenth aspect, an embodiment of this application provides another communication method. The method includes: when seventh information is received from a target base station, sending UHI of a terminal device to the target base station, where the seventh information indicates that the terminal device is successfully handed over to the target base station.

In this embodiment of this application, when the seventh information from the target base station is received, the UHI of the terminal device is sent to the target base station. In this way, a network side (the target base station) can obtain and use accurate UHI information.

According to an eleventh aspect, an embodiment of this application provides another communication method. The method includes: sending seventh information to a source base station, where the seventh information indicates that a terminal device is successfully handed over to a target base station, and the source base station is a base station that the terminal device accesses before being handed over to the target base station; and receiving UHI of the terminal device from the source base station.

In this embodiment of this application, the seventh information is sent to the source base station, to notify the source base station to send the UHI of the terminal device to the target base station. In this way, the target base station can obtain the UHI of the terminal device in a timely manner.

In a possible implementation, the method further includes: after an RRC reconfiguration complete message is received from the terminal device, collecting UHI of the terminal device in a target primary cell of the target base station, where the RRC reconfiguration complete message indicates the terminal device to apply a configuration of the target primary cell.

According to a twelfth aspect, an embodiment of this application provides another communication method. The method includes: receiving an RRC reconfiguration complete message from a terminal device, where the RRC reconfiguration complete message indicates the terminal device to apply a configuration of a target primary cell; and determining a candidate base station based on received information about a candidate cell, and sending eighth information to the candidate base station of the terminal device, where the eighth information indicates that the terminal device is successfully handed over to the target primary cell.

In this embodiment of this application, the candidate base station is determined based on the received information about the candidate cell, and the eighth information is sent to the candidate base station of the terminal device. In this way, the candidate base station can be indicated to accurately record UHI of the terminal device in a source cell and/or UHI of the terminal device in a target cell.

According to a thirteenth aspect, an embodiment of this application provides another communication method. The method includes: when eighth information is received, stopping collecting UHI of a terminal device in a source primary cell, and/or collecting UHI of the terminal device in a target primary cell, where the eighth information indicates that the terminal device is successfully handed over to the target primary cell, and the source primary cell is a primary cell the terminal device accesses before the target primary cell.

In this embodiment of this application, when the eighth information is received, collecting the UHI of the terminal device in the source primary cell is stopped, and/or the UHI of the terminal device in the target primary cell is collected. In this way, a network side (a target base station) can obtain and use accurate UHI information.

In a possible implementation, the eighth information includes at least one of identifier information of the target primary cell and identifier information of a target primary secondary cell of the terminal device.

According to a fourteenth aspect, an embodiment of this application provides a communication apparatus. The communication apparatus has a function of implementing an action in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive first information from a DU, where the first information indicates that a terminal device is to access a target cell. The processing module is configured to: when a first condition is satisfied, stop collecting UHI of the terminal device in a source cell, and/or collect UHI of the terminal device in the target cell, where the source cell is a cell the terminal device accesses before the target cell. The first condition includes at least one of the following: The first information is received; and second information is received, where the second information indicates that the terminal device successfully accesses the target cell.

For possible implementations of the communication apparatus in the fourteenth aspect, refer to the possible implementations of the first aspect.

For technical effects brought by the possible implementations of the fourteenth aspect, refer to the descriptions of the technical effects of the first aspect or the possible implementations of the first aspect.

According to a fifteenth aspect, an embodiment of this application provides another communication apparatus. The communication apparatus has a function of implementing an action in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to: receive first information from a DU, where the first information indicates that a terminal device is to access a target cell; and when the first information is received by the transceiver module, send UHI to a target CU to which the target cell belongs, where a source CU of the terminal device is different from the target CU, and/or send third information to a candidate CU to which a candidate cell of the terminal device belongs, where the third information indicates layer 1/layer 2-triggered information indicating the target cell to which the terminal device changes, and the source CU of the terminal device is different from the candidate CU. The processing module is configured to generate information including UHI of the terminal device or the third information.

For possible implementations of the communication apparatus in the fifteenth aspect, refer to the possible implementations of the second aspect.

For technical effects brought by the possible implementations of the fifteenth aspect, refer to the descriptions of the technical effects of the second aspect or the possible implementations of the second aspect.

According to a sixteenth aspect, an embodiment of this application provides another communication apparatus. The communication apparatus has a function of implementing an action in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive third information, where the third information indicates layer 1/layer 2-triggered information indicating a target cell to which a terminal device changes. The processing module is configured to: when the third information is received by the transceiver module, stop collecting UHI of the terminal device in a source cell, and/or start to collect UHI of the terminal device in the target cell, where the source cell is a cell the terminal device accesses before the target cell.

For technical effects brought by the possible implementations of the sixteenth aspect, refer to the descriptions of the technical effects of the third aspect.

According to a seventeenth aspect, an embodiment of this application provides another communication apparatus. The communication apparatus has a function of implementing an action in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive second information, where the second information indicates that a terminal device successfully accesses a target cell. The processing module is configured to: when the second information is received by the transceiver module, stop collecting UHI of the terminal device in a source cell, and/or collect UHI of the terminal device in the target cell, where the source cell is a cell the terminal device accesses before the target cell.

For possible implementations of the communication apparatus in the seventeenth aspect, refer to the possible implementations of the fourth aspect.

For technical effects brought by the possible implementations of the seventeenth aspect, refer to the descriptions of the technical effects of the fourth aspect or the possible implementations of the fourth aspect.

According to an eighteenth aspect, an embodiment of this application provides another communication apparatus. The communication apparatus has a function of implementing an action in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive fourth information. The processing module is configured to: when the fourth information is received by the transceiver module, stop collecting UHI of a terminal device in a source primary secondary cell, and/or collect UHI of the terminal device in a target primary secondary cell, where the fourth information indicates the target primary secondary cell that satisfies a condition and that is selected by the terminal device. The transceiver module is further configured to send UHI of the terminal device to a target secondary node.

For technical effects brought by the possible implementations of the eighteenth aspect, refer to the descriptions of the technical effects of the fifth aspect.

According to a nineteenth aspect, an embodiment of this application provides another communication apparatus. The communication apparatus has a function of implementing an action in the method embodiment in the sixth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive fourth information, where the fourth information indicates the target primary secondary cell that satisfies a condition and that is selected by the terminal device. The processing module is configured to: when the fourth information is received by the transceiver module, control the transceiver module to send fifth information to one or more candidate secondary nodes, where the fifth information indicates the target primary secondary cell that satisfies the condition and that is selected by the terminal device, and the target primary secondary cell is one of at least one candidate primary secondary cell indicated to the terminal device.

For technical effects brought by the possible implementations of the nineteenth aspect, refer to the descriptions of the technical effects of the sixth aspect.

According to a twentieth aspect, an embodiment of this application provides another communication apparatus. The communication apparatus has a function of implementing an action in the method embodiment in the seventh aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive fifth information from a master node. The processing module is configured to: when the fifth information is received by the transceiver module, stop collecting UHI of a terminal device in a source primary secondary cell, and/or collect UHI of the terminal device in a target primary secondary cell, where the fifth information indicates the target primary secondary cell that satisfies a condition and that is selected by the terminal device, and the source primary secondary cell is a primary secondary cell the terminal device accesses before the target primary secondary cell.

For technical effects brought by the possible implementations of the twentieth aspect, refer to the descriptions of the technical effects of the seventh aspect.

According to a twenty-first aspect, an embodiment of this application provides another communication apparatus. The communication apparatus has a function of implementing an action in the method embodiment in the eighth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to: after sixth information is received, send UHI of a terminal device in a source primary secondary cell to a master node of the terminal device, and/or send UHI of the terminal device in a primary secondary cell to a target secondary node of the terminal device, where the sixth information indicates a source secondary node of the terminal device to stop providing user data for the terminal device. The processing module is configured to parse the sixth information.

For possible implementations of the communication apparatus in the twenty-first aspect, refer to the possible implementations of the eighth aspect.

For technical effects brought by the possible implementations of the twenty-first aspect, refer to the descriptions of the technical effects of the eighth aspect or the possible implementations of the eighth aspect.

According to a twenty-second aspect, an embodiment of this application provides another communication apparatus. The communication apparatus has a function of implementing an action in the method embodiment in the ninth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive UHI of a terminal device in a primary secondary cell from a source secondary node. The processing module is configured to generate information including the UHI of the terminal device in the primary secondary cell. The transceiver module is further configured to send the information including the UHI of the terminal device in the primary secondary cell to a target secondary node.

In another possible implementation, the transceiver module is further configured to send sixth information to the source secondary node, where the sixth information indicates the source secondary node to stop providing user data for the terminal device.

For possible implementations of the communication apparatus in the twenty-second aspect, refer to the possible implementations of the ninth aspect.

For technical effects brought by the possible implementations of the twenty-second aspect, refer to descriptions of technical effects of the ninth aspect or the possible implementations of the ninth aspect.

According to a twenty-third aspect, an embodiment of this application provides another communication apparatus. The communication apparatus has a function of implementing an action in the method embodiment in the tenth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive seventh information, where the seventh information indicates that the terminal device is successfully handed over to a target base station. The processing module is configured to parse the seventh information. The transceiver module is further configured to: when the seventh information from the target base station is received, send UHI of the terminal device to the target base station.

In this embodiment of this application, when the seventh information from the target base station is received, the UHI of the terminal device is sent to the target base station. In this way, a network side (the target base station) can obtain and use accurate UHI information.

According to a twenty-fourth aspect, an embodiment of this application provides another communication apparatus. The communication apparatus has a function of implementing an action in the method embodiment in the eleventh aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate seventh information, where the seventh information indicates that a terminal device is successfully handed over to a target base station. The transceiver module is configured to: send the seventh information to a source base station, where the source base station is a base station that the terminal device accesses before being handed over to the target base station; and receive UHI of the terminal device from the source base station.

In a possible implementation, the transceiver module is further configured to receive an RRC reconfiguration complete message from the terminal device, where the RRC reconfiguration complete message indicates the terminal device to apply a configuration of a target primary cell. The processing module is further configured to: after the RRC reconfiguration complete message from the terminal device is received by the transceiver module, collect UHI of the terminal device in the target primary cell of the target base station.

For possible implementations of the communication apparatus in the twenty-fourth aspect, refer to the possible implementations of the eleventh aspect.

For technical effects brought by the possible implementations of the twenty-fourth aspect, refer to the descriptions of the technical effects of the eleventh aspect or the possible implementations of the eleventh aspect.

According to a twenty-fifth aspect, an embodiment of this application provides another communication apparatus. The communication apparatus has a function of implementing an action in the method embodiment in the twelfth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive an RRC reconfiguration complete message from a terminal device, where the RRC reconfiguration complete message indicates the terminal device to apply a configuration of a target primary cell. The processing module is configured to: determine a candidate base station based on received information about a candidate cell, and send eighth information to the candidate base station of the terminal device, where the eighth information indicates that the terminal device is successfully handed over to the target primary cell.

In this embodiment of this application, the candidate base station is determined based on the received information about the candidate cell, and the eighth information is sent to the candidate base station of the terminal device. In this way, the candidate base station can be indicated to accurately record UHI of the terminal device in a source cell and/or UHI of the terminal device in a target cell.

According to a twenty-sixth aspect, an embodiment of this application provides another communication apparatus. The communication apparatus has a function of implementing an action in the method embodiment in the thirteenth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive eighth information, where the eighth information indicates that a terminal device is successfully handed over to a target primary cell. The processing module is configured to: when the eighth information is received by the transceiver module, stop collecting UHI of the terminal device in a source primary cell, and/or collect UHI of the terminal device in the target primary cell, where the source primary cell is a primary cell the terminal device accesses before the target primary cell.

In this embodiment of this application, when the eighth information is received, collecting the UHI of the terminal device in the source primary cell is stopped, and/or the UHI of the terminal device in the target primary cell is collected. In this way, a network side (a target base station) can obtain and use accurate UHI information.

According to a twenty-seventh aspect, an embodiment of this application provides another communication apparatus. The communication apparatus includes a processor. The processor is coupled to a memory. The memory stores computer program instructions. The processor is configured to execute the computer program instructions, to cause the communication apparatus to perform the method according to any one of the first aspect to the thirteenth aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, other processing may need to be performed on the information before the information reaches the transceiver. Similarly, when the processor receives input information, the transceiver receives the information, and inputs the information to the processor. Further, after the transceiver receives the information, other processing may need to be performed on the information before the information is input to the processor.

An operation such as sending and/or receiving related to the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor, that executes computer instructions in the memory to perform these methods. For example, the processor may be further configured to execute a program stored in the memory. When the program is executed, the communication apparatus is caused to perform the method according to the first aspect or any possible implementation of the first aspect.

In a possible implementation, the memory is located outside the communication apparatus. In a possible implementation, the memory is located in the communication apparatus.

In a possible implementation, the processor and the memory may alternatively be integrated into one component, that is, the processor and the memory may alternatively be integrated together.

In a possible implementation, the communication apparatus further includes the transceiver. The transceiver is configured to: receive a signal, send a signal, or the like.

According to a twenty-eighth aspect, an embodiment of this application provides another communication apparatus. The communication apparatus includes a processing circuit and an interface circuit. The interface circuit is configured to obtain data or output data. The processing circuit is configured to perform the method according to any one of the first aspect to the thirteenth aspect.

According to a twenty-ninth aspect, an embodiment of this application provides a computer-readable storage medium. The computer-readable storage medium stores a computer program. The computer program includes program instructions. When the program instructions are executed, a computer is caused to perform the method according to any one of the first aspect to the thirteenth aspect.

According to a thirtieth aspect, an embodiment of this application provides a computer program product. The computer program product includes a computer program. The computer program includes program instructions. When the program instructions are executed, a computer is caused to perform the method according to any one of the first aspect to the thirteenth aspect.

According to a thirty-first aspect, an embodiment of this application provides a chip, including a processor and a communication interface. The processor reads, through the communication interface, instructions stored in a memory, to perform the method according to any one of the first aspect to the thirteenth aspect.

### BRIEF DESCRIPTION OF DRAWINGS

To describe technical solutions in embodiments of this application or in the background more clearly, the following briefly describes the accompanying drawings required in embodiments of this application or the background.
FIG. 1 is a diagram of an architecture of a wireless communication system according to an embodiment of this application;
FIG. 2A is a diagram of a CU-DU split architecture;
FIG. 2B is a diagram of another CU-DU split architecture;
FIG. 3 is an interaction flowchart of a communication method according to an embodiment of this application;
FIG. 4 is another interaction flowchart of a communication method according to an embodiment of this application;
FIG. 5 is another interaction flowchart of a communication method according to an embodiment of this application;
FIG. 6 is another interaction flowchart of a communication method according to an embodiment of this application;
FIG. 7 is another interaction flowchart of a communication method according to an embodiment of this application;
FIG. 8 is another interaction flowchart of a communication method according to an embodiment of this application;
FIG. 9 is another interaction flowchart of a communication method according to an embodiment of this application;
FIG. 10 is another interaction flowchart of a communication method according to an embodiment of this application;
FIG. 11 is another interaction flowchart of a communication method according to an embodiment of this application;
FIG. 12 is another interaction flowchart of a communication method according to an embodiment of this application;
FIG. 13 is another interaction flowchart of a communication method according to an embodiment of this application;
FIG. 14 is another interaction flowchart of a communication method according to an embodiment of this application;
FIG. 15 is another interaction flowchart of a communication method according to an embodiment of this application;
FIG. 16 is a diagram of a structure of a communication apparatus 1600 according to an embodiment of this application;
FIG. 17 is a diagram of a structure of another communication apparatus 170 according to an embodiment of this application; and
FIG. 18 is a diagram of a structure of another communication apparatus 180 according to an embodiment of this application.

### DESCRIPTION OF EMBODIMENTS

The terms "first", "second", and the like in the specification, claims, and accompanying drawings of this application are used to distinguish between different objects, but are not used to describe a specific sequence. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, the terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily mean a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. The terms "one", "a/an", "the", "foregoing", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" generally represents an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) only based on (or according to) A, and B may alternatively be determined (or generated) based on (or according to) A and/or other information.

For ease of understanding solutions of this application, the following first describes terms and technical solutions in embodiments of this application.

Handover (handover): In some handover procedures, mobility management of a UE in a connected state is controlled by a network device. The network device includes an access network device, for example, a base station. For example, the network device sends a handover message to indicate a cell to which the UE is handed over and how to perform handover. After receiving the handover message, the UE accesses a target cell based on content included in the handover message.

Conditional handover (conditional handover, CHO): When source link quality is good, a source base station sends CHO configuration information to a UE. After the UE receives the CHO configuration information, the UE does not immediately initiate a handover action to any candidate cell, but continues to maintain a connection and transmission with the source base station. The UE continuously determines whether a candidate cell satisfies a handover execution trigger condition, that is, a trigger condition for execution of cell handover. However, in basic handover in a new radio (new radio, NR) system, after receiving a handover command (or a handover message), the UE immediately hands over to a target cell indicated by the handover command.

Primary secondary cell addition/change includes classic (classic) primary secondary cell addition/change and conditional (conditional) primary secondary cell addition/change.

Classic (classic) primary secondary cell addition/change: When a UE is in single connectivity (configured with no PSCell), a network side triggers PSCell addition. The network side directly indicates a target PSCell to the UE, and the UE adds the target PSCell. In other words, the network side configures MR-DC for the UE. The PSCell addition can be triggered only by a primary base station (master node, MN). When the UE is configured with a PSCell, the network side triggers the PSCell change due to mobility of the UE, and this may be triggered by the MN or triggered by a secondary base station (secondary node, SN). The network side directly indicates a target PSCell to the UE, and the UE is handed over from a current PSCell to the target PSCell of the UE. In this specification, the network side is a network device, for example, a primary base station, a secondary base station, a CU, or a DU. In this specification, the secondary base station may be referred to as a secondary node, a candidate base station may be referred to as a candidate node, and the primary base station may be referred to as a master node.

Conditional primary secondary cell addition/change (conditional PSCell addition/change, CPAC): In a handover procedure in which a CPAC mechanism is introduced, a trigger node (an MN/SN) corresponding to a UE prepares a plurality of candidate PSCells in advance, and a network side sends a CPAC configuration to the UE. CPAC configuration information may include information about one or more candidate PSCell cells (for example, identifier information of the candidate PSCell cell and configuration parameter information of the candidate PSCell cell) and an execution condition corresponding to the candidate PSCell cell. After receiving the CAPC configuration information, if the UE finds that signal quality of a candidate cell satisfies a handover trigger condition, the UE uses the candidate cell as a target cell and performs random access, to perform a PSCell addition or change procedure. During classic PSCell addition/change, the network side indicates one target cell. During the conditional primary secondary cell addition/change, the network side indicates a plurality of candidate cells, and the UE obtains, through evaluation, a candidate cell that satisfies a condition, and uses the candidate cell as the target cell. After conditional primary secondary cell addition (conditional PSCell addition, CPA)/conditional primary secondary cell change (conditional PSCell change, CPC) is successfully performed, the UE releases the stored CPAC configuration. In this specification, identifier information of a cell may be a global cell identifier (cell global identifier, CGI), or a physical cell identifier (physical cell identifier, PCI) and a frequency. In this specification, a user may be understood as a user who uses a terminal device, and the user may be replaced with the terminal device. CPA: When a UE is not configured with a PSCell, a network side triggers PSCell addition, in other words, configures MR-DC for the UE. CPC: A UE is configured with MR-DC (in other words, there is an SN).

User history information (UE history information, UHI): The UHI includes historical mobility information of a user in a PCell and a PSCell. The historical mobility information includes related information about a cell previously accessed by a UE, for example, cell identifier information and duration in which the UE camps on the cell, where the cell identifier information may be a CGI and/or a PCI. A quantity of entries of previously accessed cells that are recorded is limited. If the quantity exceeds a maximum amount of data, an earliest entry is deleted first. The identifier information of the cell may be at least one of the following:
a cell global identifier (cell global identifier, CGI), a physical cell identifier (physical cell identifier, PCI) and a frequency, a physical cell identifier (physical cell identifier, PCI), a cell identifier (cell identifier, cell ID), a non-public network identifier (non-public network identifier, NPN ID), a non-terrestrial network identifier (non-terrestrial network identifier, NTN ID), or another cell identifier of the cell. The CGI may include a public land mobile network identifier (public land mobile network identifier, PLMN ID) and a cell ID.

The UHI may be recorded on a UE side and a network side separately, and is used for mobility parameter optimization, for example, selecting a proper target cell and detecting a ping-pong event, or may be used for cell traffic prediction and mobility prediction.

The UE side records the UHI: When accessing a cell of a base station, the UE records history information of a previously accessed cell, and indicates to the base station that the UHI is stored (for example, the UE includes indication information in an RRC connection setup complete (RRC connection setup complete) message or an RRC connection resume complete (RRC connection resume complete) message, indicating that the UE has historical mobility information). Then, the base station may request the UE to report the UHI. For example, a UE information request (UE information request) message carries an indication for requesting historical mobility information. After receiving the request, the UE reports the historical mobility information (for example, the UE includes the historical mobility information in a UE information response message (UE information response)).

The network side records the UHI: When the UE accesses a cell of a base station, a source base station collects and stores the UHI of the UE. When handover occurs, the source base station provides the UHI for a target base station through a handover preparation process (handover request message) on NG and XN interfaces, and triggers the target base station to start collecting and storing historical mobility information of the UE, to propagate the UHI on the network side. Currently, the network side records the UHI of the UE in consideration of recording of related information about previously accessed cells of a PCell and a PSCell in basic handover, conditional handover, and classic primary secondary cell change. When the UE is in dual connectivity (MR-DC), a secondary node (which may be referred to as a secondary station) records secondary cell group (secondary cell group, SCG) UHI (historical mobility information of the PSCell), and provides the UHI for a master node (which may be referred to as a primary base station or a primary station). The master node associates master cell group (master cell group, MCG) UHI (historical mobility information of a PCell) with SCG UHI, and sends a result of the association between the MCG UHI and the SCG UHI to the target base station in the handover request message. In addition to cell identifier information and duration in which the UE camps on a cell, the MCG UHI on the network side may further include a cell type (for example, a size of the cell, whose value is very small, small, medium, or large) and a handover cause value.

In the CHO, when the UE successfully accesses a candidate cell of the target base station, the target base station updates duration in which the UE camps on a source PCell, and updates the duration in which the UE camps on the source PCell to a value received from the source base station during handover preparation plus duration from receiving the handover request message from a source base station node to receiving an RRC reconfiguration complete message sent by the UE. For the SCG UHI received by the target base station from the source base station node through the handover request message, the target base station also updates duration in which the UE camps on a source PSCell cell.

An intra-CU (Intra-CU) LTM feature (L1/L2-triggered mobility) and a continuous CPAC feature are introduced in Rel-18 mobility. An inter-CU (Inter-CU) LTM feature and a continuous CHO feature may be further discussed in Rel-19 mobility.

LTM feature: In basic handover, a UE reports a layer 3 measurement report to a network side. The network side determines, for the UE, a target cell for handover based on the layer 3 measurement report. The network side sends a handover command to the UE through an RRC reconfiguration message. After receiving the handover command, the UE immediately performs a handover to the target cell indicated by the handover command. Currently, an intra-CU LTM solution is discussed in a Rel-18 standard. To be specific, the network side pre-sends, to the UE, the RRC reconfiguration message including configuration information of a plurality of candidate cells. The candidate cells are cells of a same CU in a base station, the UE stores the configuration information of the plurality of candidate cells. The network side sends, to the UE, layer 1/layer 2 (L1/L2)-triggered mobility information indicating that a terminal device changes to the target cell. Specifically, based on an L1 measurement report reported by the UE to the network side, the network side indicates mobility information related to the target cell to the UE based on an L2 handover command (MAC CE). The mobility information may include one or more of configuration identifier information of the target cell, identifier information of the target cell, timing advance (timing advance, TA) information, and beam indication information. The configuration identifier information of the target cell or the identifier information of the target cell is used by the terminal device to apply corresponding configuration information of the target cell. The timing advance information is used for uplink synchronization between the terminal device and the target cell. The beam indication information is used by the UE to perform uplink transmission/downlink reception on an indicated beam. The UE accesses the target cell based on the mobility information related to the target cell and the configuration information of the target cell. A manner of accessing the target cell may be accessing the target cell based on random access (RA-based cell switch) or random access-less (RA-less cell switch), and stores configuration information of one or more candidate cells to support continuous handover. An inter-CU LTM solution may be discussed in a Rel-19 standard, and the candidate cell is supported as a cell managed by different base stations (different CUs).

Continuous CPAC feature: After a UE successfully performs CPA/CPC in Rel-17, the UE releases a saved CPAC configuration and does not continue to evaluate an execution trigger condition of a candidate cell. Currently, a solution that supports continuous conditional PSCell change/addition (which may also be referred to as SCG change/addition) is discussed in a Rel-18 standard. To be specific, after a network side configures a conditional reconfiguration of one or more candidate PSCells for the UE. After the UE accesses a target PSCell (after the UE performs addition or change to the target PSCell), the UE stores the conditional reconfiguration of the one or more candidate PSCells, to continue to evaluate whether an execution trigger condition of the candidate PSCell cell is satisfied, and subsequently perform PSCell addition or change. In this way, the network side does not need to deliver an RRC reconfiguration message (configuration information corresponding to the one or more candidate PSCells) to the UE again for subsequent PSCell addition or change.

Continuous CHO feature: After a UE successfully performs CHO in Rel-16, the UE releases a saved CHO configuration and does not continue to evaluate an execution trigger condition of a candidate cell. Support of continuous CHO may be discussed in a Rel-19 standard. To be specific, after a network side configures a conditional reconfiguration of one or more candidate PCells for the UE, after the UE accesses a target PCell, the UE stores the conditional reconfiguration of the one or more candidate PCells, to continue to evaluate whether an execution trigger condition of the candidate PCell cell is satisfied, and subsequently perform conditional handover execution. Therefore, the network side does not need to send an RRC reconfiguration message (configuration information corresponding to the one or more candidate PCells) to the UE again for candidate handover.

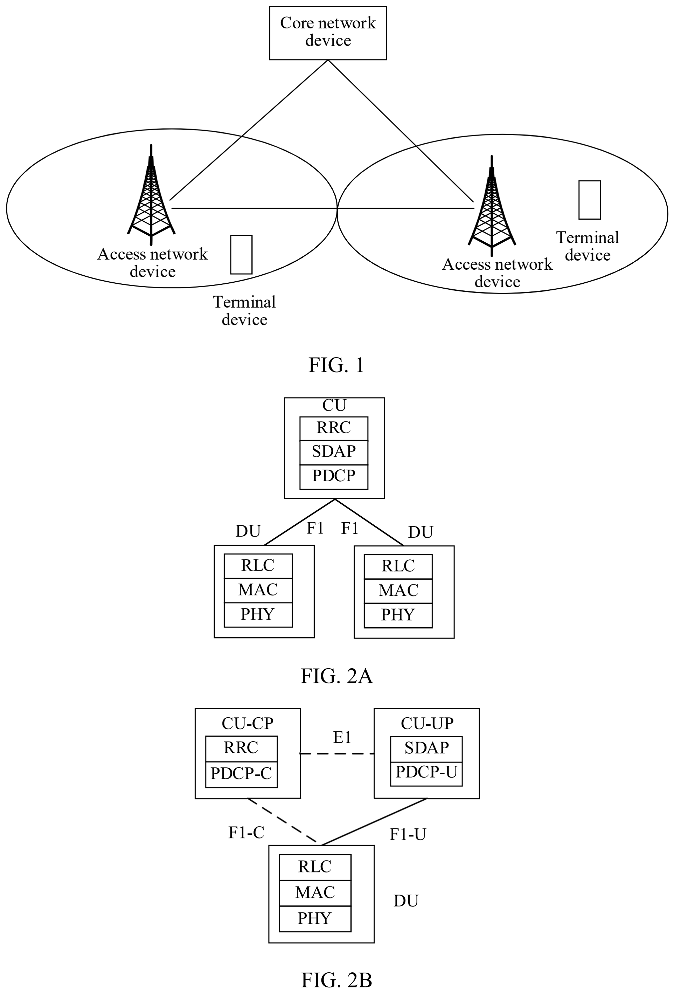

FIG. 1 is a diagram of an architecture of a wireless communication system according to an embodiment of this application. Refer to FIG. 1. Network elements in the system architecture mainly include a terminal device, a core network device, and one or more access network devices (where only two are shown). In some embodiments, the wireless communication system may include a plurality of cells. Each cell includes one or more access network devices. The access network device provides a communication service for a plurality of terminal devices. In the wireless communication system, the plurality of terminal devices may communicate with each other. The terminal device is located in coverage of one or more cells (carriers) provided by the access network device. In other words, there may be one or more cells serving the terminal device. The terminal device in the wireless communication system may perform cell handover, that is, hand over from a currently accessed cell to another cell, for example, hand over to a cell that can provide a better service for the terminal device.

The terminal device, also referred to as a terminal, a UE, a mobile station (mobile station, MS), a mobile terminal (mobile terminal, MT), or the like, is a device that provides voice and/or data connectivity for a user, for example, a handheld device or a vehicle-mounted device having a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a laptop computer (laptop computer), a machine type communication (machine type communication, MTC) terminal, and an uncrewed aerial vehicle. The terminal device may be a terminal in any form in 5G and a communication system evolved after 5G, or the like. This is not limited in this application. The terminal device may have one or more subscriber identity modules (subscriber identity module, SIM).

The access network device is a radio access network (radio access network, RAN) node (or device) that connects the terminal device to a wireless network, and may also be referred to as a base station. Currently, some examples of the RAN node are a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), a wireless fidelity (wireless fidelity, Wi-Fi) access point (access point, AP), or the like. In addition, in a network structure, the access network device may be a RAN device including a central unit (central unit, CU) node or a distributed unit (distributed unit, DU) node, or may be a RAN device including a CU node and a DU node. The RAN device including the CU node and the DU node splits protocol layers of a gNB in a new radio (new radio, NR) system. Functions of a part of the protocol layers are centrally controlled by the CU, functions of a part or all of remaining protocol layers are distributed in the DU, and the CU centrally controls the DU.

FIG. 2A is a diagram of a CU-DU split architecture. In a possible implementation, refer to FIG. 2A. Each DU is connected to a CU through an F1 logical interface. The CU is deployed with a radio resource control (radio Resource Control, RRC) layer, a packet data convergence protocol (packet data convergence protocol, PDCP) layer, and a service data adaptation protocol (service data adaptation protocol, SDAP) layer in a protocol stack. The DU is deployed with a radio link control (radio link control, RLC) layer, a media access control (media access control, MAC) layer, and a physical layer (physical layer, PHY) in the protocol stack. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. In other words, there may be another function division manner between the CU and the DU. Details are not described in embodiments of this application. A function of the CU may be implemented by one entity or different entities. For example, the function of the CU may be further divided. For example, a control plane (CP) and a user plane (UP) of the CU are separated, that is, a CU-control plane (CU-CP) and a CU-user plane (CU-UP). For example, the CU-CP and the CU-UP may be implemented by different functional entities, and the CU-CP and the CU-UP may be coupled to the DU, to jointly implement a function of a base station.

In different systems, the CU (or the CU-CP and the CU-UP) and the DU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, and the CU-UP may also be referred to as an O-CU-UP. For ease of description, the CU, the CU-CP, the CU-UP, and the DU are used as examples for description in this application. Any one of the CU (the CU-CP or the CU-UP) or the DU in this application may be implemented by a software module, a hardware module, or a combination of a software module and a hardware module.

In a possible implementation, the CU-CP is responsible for a control plane function, which mainly include RRC and PDCP-C. The PDCP-C is mainly responsible for data encryption and decryption, integrity protection, data transmission, and the like on a control plane. The CU-UP is responsible for a user plane function, and mainly includes an SDAP and a PDCP-U. FIG. 2B is a diagram of another CU-DU split architecture. As shown in FIG. 2B, a DU is connected to a CU-CP through an F1-C logical interface, and a DU is connected to a CU-UP through an F1-U logical interface. The CU-CP is deployed with RRC and a PDCP-C in a protocol stack. The CU-UP is deployed with an SDAP and a PDCP-U in the protocol stack. The SDAP is mainly responsible for processing data of a core network and mapping a data flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that a gNB is connected to the core network through an Ng interface. The CU-CP is connected to the DU through an F1-C (control plane). The CU-UP is connected to the DU through an F1-U (user plane). It is clear that, in another possible implementation, the PDCP-C is alternatively in the CU-UP.

A core network device is a device in a core network (core network, CN) that provides service support for a terminal device. Currently, some examples of the core network device are an access and mobility management function (access and mobility management function, AMF) entity, a session management function (session management function, SMF) entity, a user plane function (user plane function, UPF) entity, and the like. Details are not listed one by one herein. The AMF entity may be responsible for access management and mobility management of a terminal. The SMF entity may be responsible for session management, for example, user session establishment. The UPF entity may be a functional entity on a user plane, and is mainly responsible for connecting to an external network. It should be noted that the entity in embodiments of this application may also be referred to as a network element or a functional entity. For example, the AMF entity may also be referred to as an AMF network element or an AMF functional entity. For another example, the SMF entity may also be referred to as an SMF network element or an SMF functional entity.

A communication solution provided in embodiments of this application are also applicable to another communication system, for example, a non-terrestrial communication (non-terrestrial network) system, a wireless local area network system such as an internet of things (internet of things, IoT) network or a vehicle to everything (Vehicle to X, V2X), a wireless local area network (wireless local area network, WLAN), an LTE frequency division duplex (frequency division duplex, FDD) system, an LTE time division duplex (time division duplex, TDD) system, a 5th generation (5th generation, 5G) communication system, and a future 6th generation (6th generation, 6G) communication system.

The foregoing communication system to which the communication solution provided in embodiments of this application is applicable is merely an example for description. A communication system to which the communication solution provided in this application is applicable is not limited thereto. This is uniformly described herein, and details are not described below again.

It may be understood that a specific structure of an execution body of the method provided in embodiments of this application is not particularly limited in this application, provided that a program that records code of the method provided in embodiments of this application can be run to perform communication according to the method provided in embodiments of this application. The following uses interaction between a terminal device and an access network device (using a base station as an example) as an example for description.

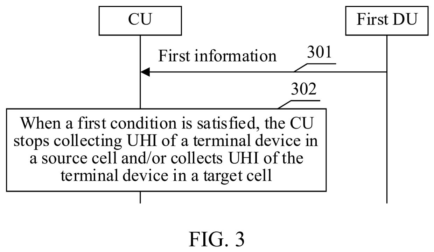

FIG. 3 is an interaction flowchart of a communication method according to an embodiment of this application. A method procedure in FIG. 3 is a solution of collecting and recording UHI by a network side for an R18 mobility feature (intra-CU LTM). As shown in FIG. 3, the method includes the following steps.

301: A first DU sends first information to a CU.

Correspondingly, the CU receives the first information from the first DU. In this application, the first DU is coupled to the CU. In other words, the CU manages or controls the first DU, that is, the first DU is managed or controlled by the CU. In this application, the CU and a DU coupled to the CU may belong to a same node, or may belong to different nodes. A form of the CU and a form of the DU coupled to the CU are not limited in this application. For example, the CU and the DU coupled to the CU belong to a same base station, for example, a gNB. For example, the first DU is any one of one or more DUs controlled by the CU. Refer to FIG. 2A and FIG. 2B. The first DU supports a source cell of a terminal device. In other words, the first DU provides coverage for a source cell of a terminal device. Alternatively, the first DU provides a service for a source cell of a terminal device. The source cell is a cell currently accessed by the terminal device, that is, a cell the terminal device accesses before a target cell. The terminal device is subsequently handed over from the source cell to the target cell. In this application, the first DU is a DU currently accessed by (or connected to) the terminal device. In other words, the first DU is a DU the terminal device accesses before the target cell (supported by a target DU). The first DU may be referred to as a source DU of the terminal device.

The first information indicates that the terminal device is to access the target cell. The first information may include configuration identifier information of the target cell or identifier information of the target cell, to notify a target cell corresponding to the CU. For example, the first information indicates that layer 1/layer 2 (L1/L2)-triggered mobility information indicating that the terminal device changes to the target cell has been sent to the terminal device. The first message may also be referred to as an LTM notification message.

302: When a first condition is satisfied, the CU stops collecting UHI of the terminal device in the source cell and/or collects UHI of the terminal device in the target cell.

The first condition includes at least one of the following: The first information is received; and second information is received, where the second information indicates that the terminal device successfully accesses the target cell.

In a possible implementation, the first condition is that the first information is received by the CU. To be specific, if receiving the first information, the CU stops collecting the UHI of the terminal device in the source cell and/or collects the UHI of the terminal device in the target cell. Because the first information indicates that the terminal device is to access the target cell, in other words, the terminal device is handed over from the source cell to the target cell (cell switch), after receiving the first information, the CU stops collecting the UHI of the terminal device in the source cell and/or collects the UHI of the terminal device in the target cell. In this way, the network side (that is, the CU) can obtain and use accurate UHI.

In a possible implementation, the first condition is that the second information is received by the CU. The second information indicates that the terminal device successfully accesses the target cell. For example, the second information is carried in a first message. The first message is sent to a target CU (that is, the foregoing CU) by the target DU accessed by the terminal device. The target CU is a CU to which the target cell belongs. For example, the first message is a handover success message sent by the target DU to the target CU. The handover success message indicates that the terminal device is handed over to the target cell. The handover success message may carry the identifier information of the target cell. In this specification, the handover success message may be replaced with a handover success notification, an access success message, or the like. For example, the second information is carried in a second message. The second message is an RRC reconfiguration complete message sent by the terminal device. The RRC reconfiguration complete message may indicate that the terminal device has completed RRC reconfiguration for the target cell. It may be understood that the terminal device sending the RRC reconfiguration complete message to the CU indicates that the terminal device is to access the target cell. Therefore, the CU may learn, based on the RRC reconfiguration complete message, that the terminal device successfully accesses the target cell. That the CU receives the second information indicates that the terminal device has been handed over to the target cell. Therefore, after receiving the second information, the CU stops collecting the UHI of the terminal device in the source cell and/or collects the UHI of the terminal device in the target cell; and may stop collecting the UHI in the source cell in a timely manner and/or collect the UHI of the terminal device in the target cell in a timely manner. In this way, the network side (that is, the CU) can obtain and use accurate UHI.

It should be noted that, in this embodiment of this application, both the first DU and the target DU (that is, a second DU in FIG. 3) are managed by the CU. In other words, both the source cell and the target cell of the terminal device belong to a same CU. In other words, the source cell and the target cell of the terminal device are cells managed by a same base station (or CU). This embodiment of this application may be applied to a scenario in which a terminal device performs LTM in a same CU (where cell handover in a same CU is performed in an LTM manner), or may be applied to a scenario in which a terminal device performs continuous LTM in a same CU (where continuous cell handover in a same CU is performed in an LTM manner).

In this embodiment of this application, when the first condition is satisfied, the CU stops collecting the UHI of the terminal device in the source cell and/or collects the UHI of the terminal device in the target cell. In this way, the network side (that is, the CU) can obtain and use accurate UHI.

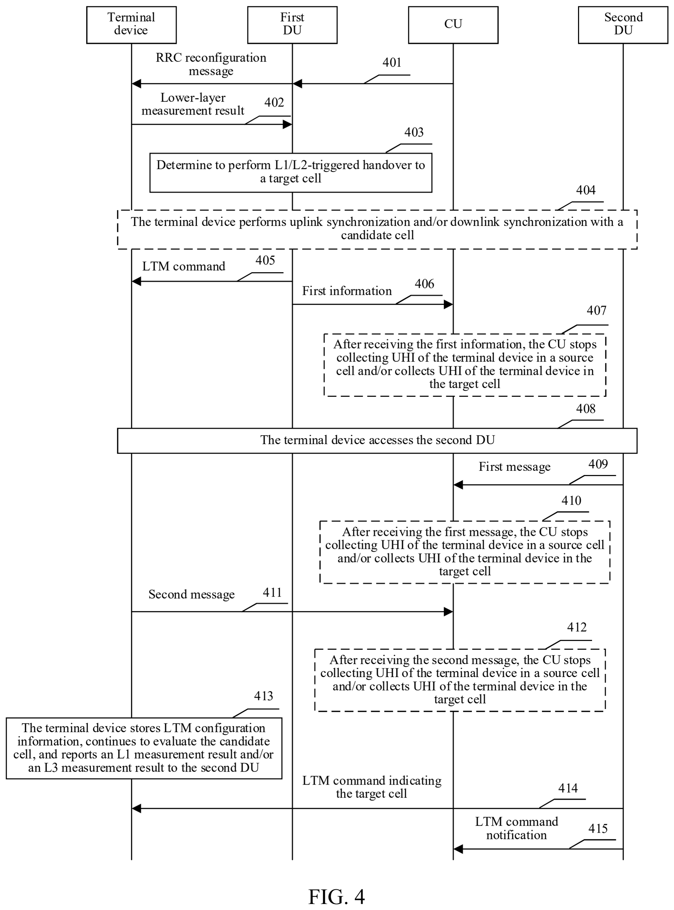

FIG. 4 is another interaction flowchart of a communication method according to an embodiment of this application. A method procedure in FIG. 4 is a possible implementation of the method described in FIG. 3. As shown in FIG. 4, the method includes the following steps.

401: A CU sends an RRC reconfiguration message to a terminal device via a first DU.

Correspondingly, the terminal device receives the RRC reconfiguration message sent by the CU to the terminal device via the first DU. The first DU may be a DU currently accessed by the terminal device, and is also referred to as a source DU. The CU manages or controls the first DU. The RRC reconfiguration message may include L1/L2 mobility configuration information. For example, the L1/L2 mobility configuration information includes configuration information of one or more candidate cells of the terminal device, and may further include L1 measurement control information.

For example, before step 401, the method procedure in FIG. 4 may further include the following step: The CU obtains lower-layer RRC configuration information of the candidate cell of the terminal device. For example, the CU sends an LTM configuration request to a second DU. The LTM configuration request indicates the candidate cell of the terminal device. When accepting the LTM configuration request, the second DU sends lower-layer RRC configuration information of the candidate cell to the CU. The second DU supports the one or more candidate cells (including a target cell) of the terminal device. In this application, the second DU provides coverage of the candidate cell, and the second DU is one or more candidate DUs of the terminal device. In FIG. 4, the second DU may alternatively be used to represent a target DU. In this application, the target DU provides coverage of the target cell of the terminal device. In other words, the target DU provides a service for the target cell of the terminal device.

402: The terminal device sends a lower-layer measurement result to the first DU.

Correspondingly, the first DU receives the lower-layer measurement result from the terminal device. The lower-layer measurement result may be an L1 measurement result, or may be an L3 measurement result. For example, the L1/L2 mobility configuration information in the RRC reconfiguration message received by the terminal device includes the L1 measurement control information. The terminal device performs measurement on the one or more candidate cells based on the L1 measurement control information, to obtain the L1 measurement result, that is, the lower-layer measurement result, and reports the L1 measurement result to the DU.

403: The first DU determines, based on the lower-layer measurement result, to perform L1/L2-triggered handover to the target cell.

An example of step 403 is as follows: The first DU determines, based on the lower-layer (L1) measurement result, to instruct, by using an L2 handover command, the terminal device to hand over to the target cell.

404: The terminal device performs uplink synchronization and/or downlink synchronization with the candidate cell.

Step 404 is optional. For example, a network side may trigger the terminal device to perform early uplink synchronization and/or early downlink synchronization with the candidate cell. The early uplink synchronization is also referred to as early advance timing (timing advance, TA) obtaining.

405: The first DU sends an LTM command to the terminal device.

Correspondingly, the terminal device receives the LTM command from the first DU. For example, the LTM command indicates mobility information indicating that the terminal device changes to the target cell. The LTM command may carry configuration identifier information of the target cell or identifier information of the target cell, or may further carry one or more of timing advance (timing advance, TA) information and beam indication information.

The first DU may send the LTM command to the terminal device by using a medium access control control element (medium access control control element, MAC CE) or another message from an L1/L2. In other words, the LTM command is included in a MAC CE or another message from an L1/L2.

406: The first DU sends first information to the CU.

For step 406, refer to step 301.

407: After receiving the first information, the CU stops collecting UHI of the terminal device in a source cell and/or collects UHI of the terminal device in the target cell.

Step 407 is optional. Step 407 may be understood as an example of step 302 in FIG. 3.

408: The terminal device accesses the second DU.

A possible implementation of step 408 is as follows: The terminal device accesses the second DU, that is, the target DU, according to the LTM command. An example in which the terminal device accesses the second DU is that the terminal device is handed over from the source cell to the target cell (cell switch), to be specific, accesses the target cell in a random access manner or a random access-less manner according to the LTM command.

409: The second DU sends a first message to the CU.

The first message may include second information. The second information indicates that the terminal device successfully accesses the target cell. The second message may include the identifier information of the target cell. For example, the first message is an access success message.

410: After receiving the first message, the CU stops collecting UHI of the terminal device in a source cell and/or collects UHI of the terminal device in the target cell.

Step 410 is optional. Because the first message includes the second information, and a first condition may be that the second information is received, step 410 may be considered as an example of step 302 in FIG. 3.

411: The terminal device sends a second message to the CU.

The second message may include the second information. The second information indicates that the terminal device successfully accesses the target cell. For example, the second message is an RRC reconfiguration complete message. The RRC reconfiguration complete message includes the second information. Step 411 is optional.

412: After receiving the second message, the CU stops collecting UHI of the terminal device in a source cell and/or collects UHI of the terminal device in the target cell.

Step 412 is optional. Because the second message includes the second information, and the first condition may be that the second information is received, step 412 may be considered as an example of step 302 in FIG. 3.

It can be learned from the foregoing descriptions that step 407, step 410, and step 412 are all examples of step 302 in FIG. 3. It should be noted that step 407, step 410, and step 412 are parallel, and the method procedure in FIG. 4 may include any one or more of step 407, step 410, and step 412. For example, the method procedure in FIG. 4 includes step 401 to step 409. For another example, the method procedure in FIG. 4 includes step 401 to step 406 and step 408 to step 410. For another example, the method procedure in FIG. 4 includes step 401 to step 406, step 408, step 409, step 411, and step 412.

413: The terminal device stores LTM configuration information, continues to evaluate the candidate cell, and reports the L1 measurement result and/or the L3 measurement result to the second DU.

After the terminal device accesses the target cell, the second DU may be considered as a current serving DU of the terminal device. In comparison with the target DU for subsequent handover, the current serving DU is also referred to as a source DU. For example, after receiving the RRC reconfiguration message sent by the CU to the terminal device via the first DU, the terminal device stores the LTM configuration information carried in the RRC reconfiguration message.

414: The second DU sends, to the terminal device, an LTM command that indicates the target cell.

The LTM command that indicates the target cell may be an LTM command that indicates the terminal device to hand over to a new target cell. The target cell in step 414 may be understood as the new target cell. It should be understood that, after the terminal device is handed over from the source cell to a target cell, the target cell becomes the source cell of the terminal device. In this application, the target cell of the terminal device is not a fixed cell, but a cell that is selected by a base station (for example, the second DU) for the terminal device and that is to be accessed by the terminal device.

415: The second DU sends an LTM command notification to the CU.

The LTM command notification may include the first information. Step 414 and step 415 may be considered as repeated execution of step 405 and step 406. This embodiment of this application is applicable to a scenario in which the terminal device performs continuous intra-CU LTM. Step 405 and step 406 belong to a cell handover procedure, and step 414 and step 415 belong to another cell handover procedure.

In this embodiment of this application, when the first condition is satisfied, the CU stops collecting the UHI of the terminal device in the source cell and/or collects the UHI of the terminal device in the target cell. In this way, the network side (that is, the CU) can obtain and use accurate UHI.

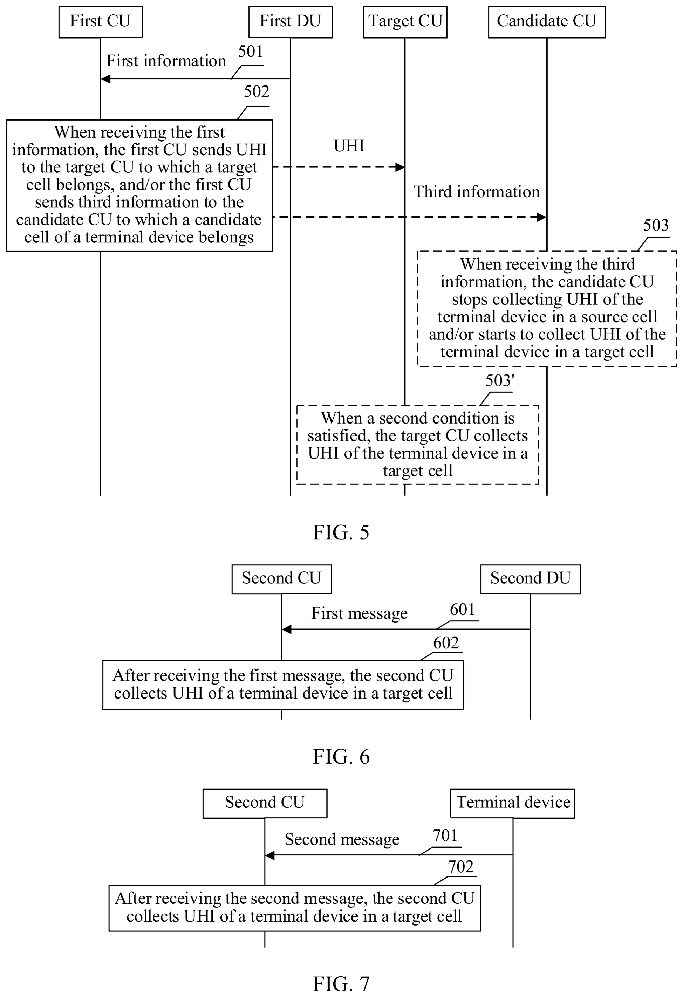

FIG. 5 is another interaction flowchart of a communication method according to an embodiment of this application. A method procedure in FIG. 5 may be a solution of collecting and recording UHI by a network side for a mobility feature (inter-CU LTM) that may be introduced in R19. As shown in FIG. 5, the method includes the following steps.

501: A first DU sends first information to a first CU.

Correspondingly, the first CU receives the first information from the first DU. In this embodiment of this application, the first DU is coupled to the first CU. In other words, the first CU manages or controls the first DU, that is, the first DU is managed or controlled by the first CU. The first DU supports a source cell of a terminal device. The source cell is a cell currently accessed by the terminal device, that is, a cell the terminal device accesses before a target cell. The terminal device is subsequently handed over from the source cell to the target cell. The first CU is a CU to which the source cell currently accessed by the terminal device belongs. The first CU may be referred to as a source CU of the terminal device. In this application, the first DU is a DU currently accessed by (or connected to) the terminal device. The first DU may be referred to as a source DU of the terminal device.

For descriptions of the first information, refer to the descriptions of the first information in step 301 in FIG. 3.

502: When receiving the first information, the first CU sends UHI to a target CU to which the target cell belongs, and/or the first CU sends third information to a candidate CU to which a candidate cell of the terminal device belongs.

Correspondingly, the target CU to which the target cell belongs receives the UHI of the terminal device from the first CU, and/or the candidate CU to which the candidate cell of the terminal device belongs receives the third information from the first CU. The UHI sent by the first CU to the target CU to which the target cell belongs may be the UHI of the terminal device that is recorded by the first CU. The source CU (that is, the first CU) and the target CU (that is, a second CU in FIG. 5) of the terminal device are not the same. The third information may indicate that layer 1/layer 2 (L1/L2)-triggered mobility information indicating that the terminal device changes to the target cell has been sent to the terminal device, or may indicate layer 1/layer 2-triggered information indicating the target cell to which the terminal device changes. The third information may include identifier information of the target cell. For example, the third information is carried in an LTM command notification. The source CU and the candidate CU of the terminal device are not the same. The target CU is one of candidate CUs to which at least one candidate cell of the terminal device belongs.

An example of step 502 is as follows: When receiving the first information, the first CU sends the UHI to the target CU to which the target cell belongs. This example may be understood as that the source CU (for example, the first CU) of the terminal device sends the UHI to the target CU of the terminal device. In this way, the target CU of the terminal device can obtain the UHI of the terminal device. In this example, the target CU to which the target cell belongs may obtain the UHI of the terminal device, and the UHI of the terminal device includes a series of pieces of related information about cells previously accessed by the terminal device, including the source cell. For example, after receiving the UHI of the terminal device from the first CU, the target CU collects UHI of the terminal device in the target cell. For example, after the terminal device accesses the target cell, the target CU collects the UHI of the terminal device in the target cell. For example, after receiving a handover success notification from a second DU, the target CU collects the UHI of the terminal device in the target cell. The second DU is a DU to which the target cell belongs. The handover success notification indicates that the terminal device is successfully handed over to the target cell. For another example, when receiving an RRC reconfiguration complete message from the terminal device, the target CU collects the UHI of the terminal device in the target cell. Further, after the UE accesses the target DU, when next LTM is performed, after receiving information indicating that the terminal device is to access to a new target cell, the target CU sends the UHI to a CU (that is, a new target CU) to which the new target cell belongs.

Another example of step 502 is as follows: When receiving the first information, the first CU sends the third information to the candidate CU. After receiving the third information, any candidate CU may stop collecting UHI of the UE in the source cell (a latest PCell entry), and/or collect UHI of the terminal device in the target cell. The candidate CU to which the candidate cell of the terminal device belongs may include the target CU. In this example, each candidate CU of the terminal device can collect the UHI of the terminal device in the target cell in a timely manner.

Another example of step 502 is as follows: When receiving the first information, the first CU sends the UHI to the target CU to which the target cell belongs, and sends the third information to the candidate CU to which the candidate cell of the terminal device belongs. The candidate CU to which the candidate cell of the terminal device belongs does not include the target CU. In this example, each candidate CU and each target CU of the terminal device can collect UHI of the terminal device in the target cell in a timely manner.

503: When receiving the third information, the candidate CU stops collecting UHI of the terminal device in the source cell and/or starts to collect the UHI of the terminal device in the target cell.

The source cell is a cell the terminal device accesses before the target cell. Step 503 is optional.

For example, step 502 is: When receiving the first information, the first CU sends the third information to the candidate CU to which the candidate cell of the terminal device belongs, where the candidate CU may include the target CU, and step 503 may be understood as: When receiving the third information, a candidate CU (including the target CU) to which each candidate cell of the terminal device belongs stops collecting the UHI of the terminal device in the source cell and/or starts to collect the UHI of the terminal device in the target cell.

503': When a second condition is satisfied, the target CU collects the UHI of the terminal device in the target cell.

The second condition includes at least one of the following: The UHI of the terminal device from the first CU is received; and second information is received, where the second information indicates that the terminal device successfully accesses the target cell. Step 503' is optional.

For example, the second information is carried in a first message. The first message is sent to the target CU by the target DU accessed by the terminal device. For example, the first message is a handover success message sent by the target DU to the target CU. The handover success message indicates that the terminal device is handed over to the target cell. The handover success message may carry the identifier information of the target cell or configuration identifier information of the target cell. For example, the second information is carried in a second message. The second message is an RRC reconfiguration complete message sent by the terminal device. The RRC reconfiguration complete message may indicate that the terminal device has completed RRC reconfiguration for the target cell. Therefore, after receiving the second information, the target CU stops collecting the UHI of the terminal device in the source cell and/or collects the UHI of the terminal device in the target cell; and may stop collecting the UHI in the source cell in a timely manner and/or collect the UHI of the terminal device in the target cell in a timely manner. In this way, the network side (that is, the target CU) can obtain and use accurate UHI.

It should be noted that step 503 and step 503' are two parallel steps. In other words, the method procedure in FIG. 5 includes step 503 or step 503'. For example, step 502 is: When receiving the first information, the first CU sends the UHI to the target CU to which the target cell belongs. The method procedure in FIG. 5 includes step 503', but does not include step 503. For example, step 502 is: When receiving the first information, the first CU sends the third information to the candidate CU to which the candidate cell of the terminal device belongs. The method procedure in FIG. 5 includes step 503, but does not include step 503'. This embodiment of this application may be applied to a scenario in which the terminal device performs inter-CU LTM (where inter-CU cell handover is performed in an LTM manner), or may be applied to a scenario in which the terminal device performs inter-CU continuous LTM (where inter-CU continuous cell handover is performed in an LTM manner).

In this embodiment of this application, when receiving the first information, the first CU sends the UHI to the target CU to which the target cell belongs, and/or the first CU sends the third information to the candidate CU to which the candidate cell of the terminal device belongs. In this way, the network side (the target CU) can obtain and use accurate UHI.

FIG. 6 is another interaction flowchart of a communication method according to an embodiment of this application. A method procedure in FIG. 6 may be another solution of collecting and recording UHI by a network side for a mobility feature (inter-CU LTM) that may be introduced in R19. As shown in FIG. 6, the method includes the following steps.

601: A second DU sends a first message to a second CU.

The first message may include second information. The second information indicates that a terminal device successfully accesses a target cell. The second information may include configuration identifier information or identifier information of the target cell. For example, the first message is an access success message. The second DU manages the target cell currently accessed by the terminal device. The second CU is a CU to which the target cell currently accessed by the terminal device belongs. The second CU is different from a CU of a source cell the terminal device accesses before the target cell. For example, after the terminal device accesses the target cell, the second DU sends the first message to the second CU. Alternatively, after the terminal device is handed over from the source cell to the target cell, the second DU sends the first message to the second CU.

602: After receiving the first message, the second CU collects UHI of the terminal device in the target cell.

In this embodiment of this application, after receiving the first message, the second CU collects the UHI of the terminal device in the target cell. In this way, the UHI of the terminal device in the target cell can be collected in a timely manner.

FIG. 7 is another interaction flowchart of a communication method according to an embodiment of this application. A method procedure in FIG. 7 may be understood as another solution of collecting and recording UHI by a network side for a mobility feature (inter-CU LTM) that may be introduced in R19. As shown in FIG. 7, the method includes the following steps.

701: A terminal device sends a second message to a second CU.

The second message may include second information. The second information indicates that the terminal device successfully accesses a target cell. For example, the second message is an RRC reconfiguration complete message. The RRC reconfiguration complete message includes the second information. The second CU is a CU to which the target cell currently accessed by the terminal device belongs. The second CU is different from a CU of a source cell the terminal device accesses before the target cell. For example, after being handed over from the source cell to the target cell (that is, accessing the target cell), the terminal device sends the second message to the second CU.

702: After receiving the second message, the second CU collects UHI of the terminal device in the target cell.

In this embodiment of this application, after receiving the second message, the second CU collects the UHI of the terminal device in the target cell. In this way, the UHI of the terminal device in the target cell can be collected in a timely manner.

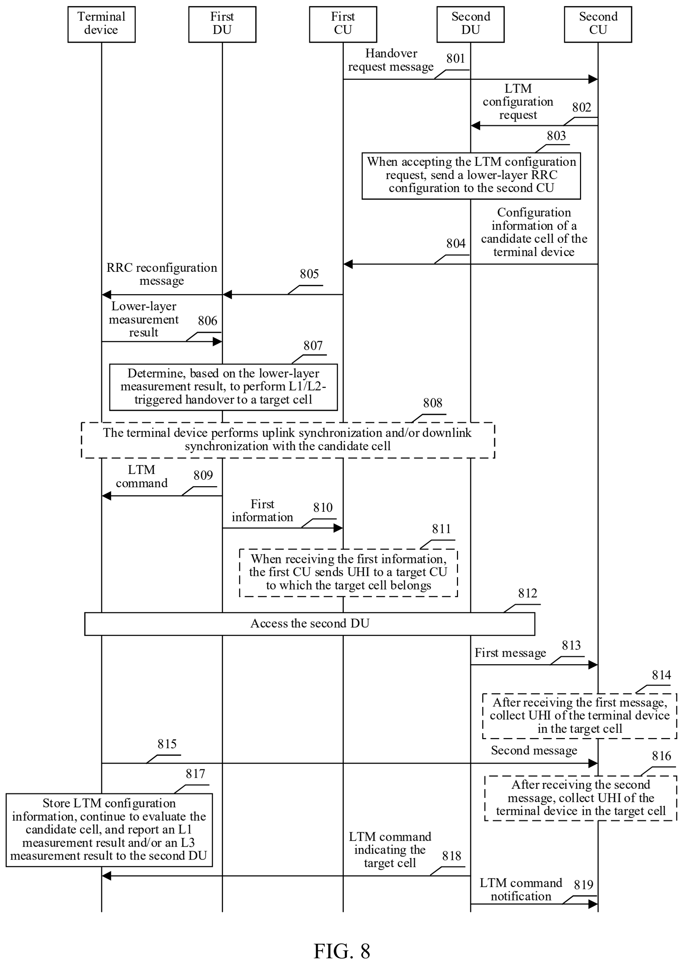

FIG. 8 is another interaction flowchart of a communication method according to an embodiment of this application. A method procedure in FIG. 8 shows possible implementations of the methods described in FIG. 5, FIG. 6, and FIG. 7.

801: A first CU sends a handover request message to a second CU.

Correspondingly, the second CU receives the handover request message from the first CU. The first CU may be a CU to which a source cell currently accessed by a terminal device belongs. The first CU may be referred to as a source CU of the terminal device. The second CU is a candidate CU to which a candidate cell belongs. A target CU is one of candidate CUs. The second CU may be referred to as a target CU of the terminal device. The handover request message may indicate one or more candidate cells of the terminal device. For example, the handover request message includes identifier information of one or more candidate cells of the terminal device.

802: The second CU sends an LTM configuration request to a second DU.

The LTM configuration request indicates the one or more candidate cells of the terminal device. A DU to which the one or more candidate cells belong is the second DU. The second DU is managed or controlled by the second CU. It should be noted that, in FIG. 8, the second DU corresponds to the candidate cell of the terminal device, and a first DU corresponds to the source cell of the terminal device.

803: When accepting the LTM configuration request, the second DU sends a lower-layer RRC configuration to the second CU.

That the second DU accepts the LTM configuration request indicates that the second DU accepts (or agrees) the terminal device to access the candidate cell managed by the second DU.

804: The second CU sends configuration information of the candidate cell of the terminal device to the first CU.

805: The first CU sends an RRC reconfiguration message to the terminal device via the first DU.

Correspondingly, the terminal device receives the RRC reconfiguration message sent by the first CU to the terminal device via the first DU. The RRC reconfiguration message may include L1/L2 mobility configuration information. For example, the L1/L2 mobility configuration information includes configuration information of the one or more candidate cells of the terminal device, and may further include L1 measurement control information.

806: The terminal device sends a lower-layer measurement result to the first DU.

Correspondingly, the first DU receives the lower-layer measurement result from the terminal device.

807: The first DU determines, based on the lower-layer measurement result, to perform L1/L2-triggered handover to a target cell.

808: The terminal device performs uplink synchronization and/or downlink synchronization with the candidate cell.

809: The first DU sends an LTM command to the terminal device.

For step 806 to step 809, refer to step 402 to step 405. Details are not described herein again.

810: The first DU sends first information to the first CU.

For descriptions of the first information, refer to step 301.

811: When receiving the first information, the first CU sends UHI to the target CU to which the target cell belongs.

Step 811 is optional. Step 811 may be understood as an example of step 502 in FIG. 5.

For example, step 811 may be replaced with step 811': When receiving the first information, the first CU sends third information to the candidate CU to which the candidate cell of the terminal device belongs. The third information may indicate that layer 1/layer 2 (L1/L2)-triggered mobility information indicating that the terminal device changes to the target cell has been sent to the terminal device, or may indicate layer 1/layer 2-triggered information indicating the target cell to which the terminal device changes. After receiving the third information, any candidate CU may stop collecting UHI of the UE in the source cell (a latest PCell entry), and/or collect UHI of the terminal device in the target cell. For example, the method procedure in FIG. 8 includes step 801 to step 810, step 811', step 812, step 813, and step 817 to step 819. Optionally, when receiving the first information, the first CU further sends the UHI of the terminal device to the candidate CU to which the candidate cell of the terminal device belongs.

For example, step 811 may be replaced with step 811": When receiving the first information, the first CU sends the UHI to the target CU (that is, the second CU) to which the target cell belongs, and sends third information to the candidate CU to which the candidate cell of the terminal device belongs. The candidate CU to which the candidate cell of the terminal device belongs does not include the target CU. In this example, each candidate CU and each target CU of the terminal device collect UHI of the terminal device in the target cell in a timely manner. Optionally, when receiving the first information, the first CU further sends the UHI of the terminal device to the candidate CU to which the candidate cell of the terminal device belongs. For example, the method procedure in FIG. 8 includes step 801 to step 810, step 811", step 812, step 813, and step 817 to step 819.

812: The terminal device accesses the second DU.

For step 812, refer to step 808.

813: The second DU sends a first message to the second CU.

The first message may include second information. The second information indicates that the terminal device successfully accesses the target cell. The second information may include configuration identifier information of the target cell or identifier information of the target cell. For example, the first message is an access success message, and the first message may include the second information.

814: After receiving the first message, the second CU collects the UHI of the terminal device in the target cell.

Step 814 is optional. Because the first message includes the second information, and the foregoing second condition includes that the second information is received, step 814 may be considered as an example of step 503' in FIG. 5.

815: The terminal device sends a second message to the second CU.

The second message may include the second information. The second information indicates that the terminal device successfully accesses the target cell. For example, the second message is an RRC reconfiguration complete message. The RRC reconfiguration complete message includes the second information. Step 815 is optional.

816: After receiving the second message, the second CU collects the UHI of the terminal device in the target cell.

Step 816 is optional. Because the second message includes the second information, and the foregoing second condition includes that the second information is received, step 816 may be considered as an example of step 503' in FIG. 5.

It can be learned from the foregoing descriptions that step 811 is an example of step 503 in FIG. 5, and step 814 and step 816 are examples of step 503' in FIG. 5. It should be noted that step 814 and step 816 are parallel. The method procedure in FIG. 8 may include any one of step 811, step 814, and step 816, or may include step 811 and step 814 or step 816. For example, the method procedure in FIG. 8 includes step 801 to step 813. For another example, the method procedure in FIG. 8 includes step 801 to step 814. For another example, the method procedure in FIG. 8 includes step 801 to step 812, step 815, and step 816.

817: The terminal device stores LTM configuration information, continues to evaluate the candidate cell, and reports an L1 measurement result and/or an L3 measurement result to the second DU.

818: The second DU sends, to the terminal device, an LTM command that indicates the target cell.

For step 817 and step 818, refer to step 413 and step 414.

819: The second DU sends an LTM command notification to the second CU.

The LTM command notification may include the first information. Step 818 and step 819 may be considered as repeated execution of step 809 and step 810. This embodiment of this application is applicable to a scenario in which the terminal device continuously performs cell handover. Step 809 and step 810 belong to a cell handover procedure, and step 818 and step 819 belong to another cell handover procedure.

In this embodiment of this application, when receiving the first information, the first CU sends the UHI to the target CU to which the target cell belongs, and/or the first CU sends the third information to the candidate CU to which the candidate cell of the terminal device belongs. In this way, a network side (the target CU) can obtain and use accurate UHI.

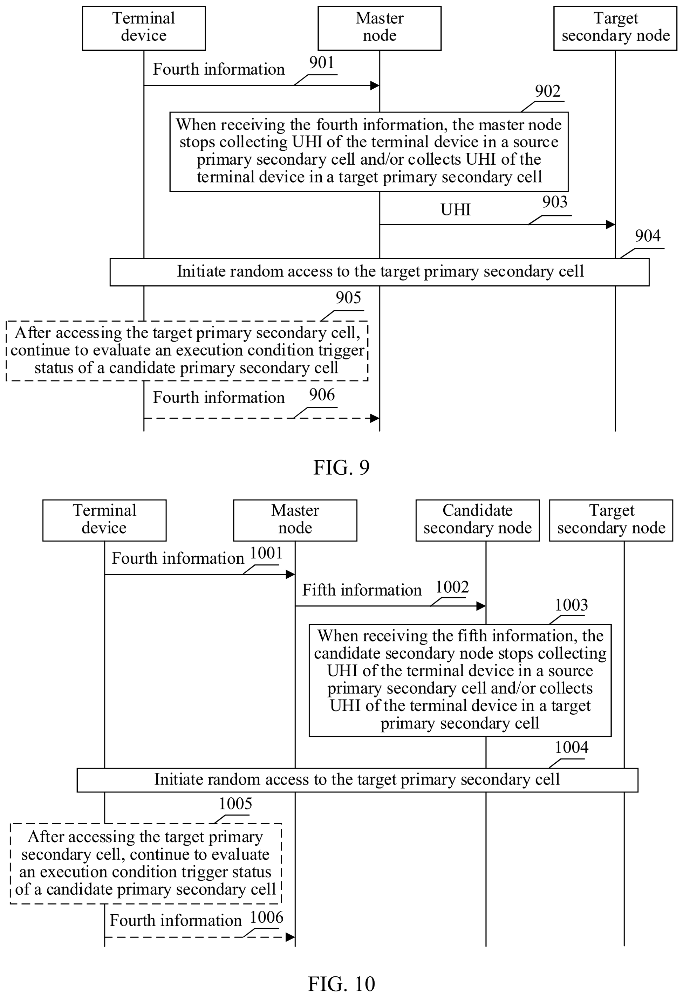

FIG. 9 is another interaction flowchart of a communication method according to an embodiment of this application. As shown in FIG. 9, the method includes the following steps.

901: A terminal device sends fourth information to a master node.

Correspondingly, the master node receives the fourth information from the terminal device. In this embodiment of this application, the terminal device communicates with a plurality of base stations. A base station in the plurality of base stations that performs control plane signaling interaction with a core network is the master node, and another base station is a secondary base station, that is, a secondary node. The fourth information indicates a target primary secondary cell (PSCell) that satisfies a condition and that is selected by the terminal device, and may include configuration identifier information of the target primary secondary cell or identifier information of a target cell. The condition being satisfied means that an execution trigger condition corresponding to the candidate primary secondary cell is satisfied. For example, when obtaining, through evaluation, that one or more candidate PSCell cells satisfy the corresponding execution trigger condition, the terminal device selects one candidate PSCell as the target PSCell, and sends the fourth information to the master node. The fourth information may be carried in an RRC reconfiguration complete message that indicates the target PSCell selected by the terminal device.

902: When receiving the fourth information, the master node stops collecting UHI of the terminal device in a source primary secondary cell and/or collects UHI of the terminal device in the target primary secondary cell.

The source primary secondary cell may be a primary secondary cell the terminal device accesses before the target primary secondary cell. Alternatively, the source primary secondary cell is a primary secondary cell that is currently accessed when the terminal device obtains, through evaluation, whether the one or more candidate PSCell cells satisfy the corresponding execution trigger condition. That the master node stops collecting the UHI of the terminal device in the source primary secondary cell may be: The terminal device stops collecting UHI of a latest (most recent) PSCell entry.

903: The master node sends UHI of the terminal device to a target secondary node.

Correspondingly, the target secondary node receives the UHI of the terminal device from the master node. The target secondary node is a node to which the target primary secondary cell belongs. In other words, the target primary secondary cell is a cell managed by the target secondary node. The UHI of the terminal device that is sent by the master node to the target secondary node may include the UHI of the terminal device in the source primary secondary cell and the UHI of the terminal device in the target primary secondary cell, or may include only the UHI of the terminal device in the source primary secondary cell.

A possible implementation of step 903 is as follows: When receiving the fourth information, the master node sends the UHI of the terminal device to the target secondary node. For example, when receiving the fourth information, the master node sends all recorded UHI of the terminal device to the target secondary node. For example, when receiving the fourth information, the master node sends, to the target secondary node, recorded UHI that is of the terminal device and that satisfies a filtering condition. The filtering condition may be set based on an actual requirement. For example, the filtering condition is UHI of the terminal device in a target time period. The master node sends recorded UHI of the terminal device in the target time period to the target secondary node. An end time of the target time period is a moment at which the fourth information is received. Duration of the target time period is 20 seconds, 3 minutes, 30 minutes, 2 hours, 12 hours, 24 hours, or the like. For another example, the filtering condition is sorting recently recorded UHI of the terminal device in k primary secondary cells in a time sequence. The master node sends, to the target secondary node, the recently recorded UHI of the terminal device in the k primary secondary cells that is sorted in the time sequence, where k is an integer greater than 0. The master node sends, to the target secondary node, the recorded UHI that is of the terminal device and that satisfies the filtering condition, so that signaling overheads can be reduced.

904: The terminal device initiates random access to the target primary secondary cell.

A sequence of step 904 and step 901 is not limited. For example, after sending the fourth information to the master node, the terminal device initiates random access to the target primary secondary cell. For example, when sending the fourth information to the master node, the terminal device initiates random access to the target primary secondary cell.

905: After accessing the target primary secondary cell, the terminal device continues to evaluate an execution condition trigger status of the candidate primary secondary cell.

Step 905 is optional.

906: The terminal device sends fourth information to the master node.

The fourth information indicates a target primary secondary cell (PSCell) that satisfies the condition and that is selected by the terminal device. It should be noted that the target primary secondary cell indicated by the fourth information in step 906 is different from the target primary secondary cell indicated by the fourth information in step 901. For example, the fourth information in step 901 indicates a target primary secondary cell #1 that satisfies the condition and that is selected by the terminal device, and the fourth information in step 906 indicates a target primary secondary cell #2 that satisfies the condition and that is selected by the terminal device. Step 906 is optional. Step 906 and step 901 belong to two different CPC procedures. Step 906 may be considered as that the terminal device performs step 901 again. After performing step 906, the terminal device may jointly perform operations similar to step 902 to step 905 with the master node. This embodiment of this application may be applied to a scenario in which a continuous CPAC feature is supported. This embodiment of this application may be used as an example of recording UHI by a network side for an R18 mobility feature (the continuous CPAC feature).

In this embodiment of this application, when receiving the fourth information, the master node stops collecting the UHI of the terminal device in the source primary secondary cell and/or collects the UHI of the terminal device in the target primary secondary cell. In this way, the UHI of the terminal device in the target primary secondary cell can be collected in a timely manner, and collecting the UHI of the terminal device in the source primary secondary cell can be stopped in a timely manner. The master node sends the UHI of the terminal device to the target secondary node, so that the UHI in the primary secondary cell can be provided for the target secondary node in a timely manner.

FIG. 10 is another interaction flowchart of a communication method according to an embodiment of this application. As shown in FIG. 10, the method includes the following steps.

1001: A terminal device sends fourth information to a master node.

For step 1001, refer to step 901.

1002: When receiving the fourth information, the master node sends fifth information to one or more candidate secondary nodes.

The fifth information indicates a target primary secondary cell that satisfies a condition and that is selected by the terminal device. The target primary secondary cell is one of at least one candidate primary secondary cell indicated for the terminal device. An example of step 1002 is as follows: When receiving the fourth information, the master node sends the fifth information to all candidate secondary nodes of the terminal device, where the fifth information indicates the target primary secondary cell that satisfies the condition and that is selected by the terminal device.

1003: When receiving the fifth information, the candidate secondary node stops collecting UHI of the terminal device in a source primary secondary cell and/or collects UHI of the terminal device in the target primary secondary cell.

The source primary secondary cell is a primary secondary cell the terminal device accesses before the target primary secondary cell. That the candidate secondary node stops collecting the UHI of the terminal device in the source primary secondary cell may be: stopping collecting information about a latest PSCell entry.

It should be noted that, because the candidate secondary node (SN) maintains the UHI of the terminal device, and a target secondary node is one of candidate secondary nodes, the target secondary node has maintained the UHI of the terminal device, and does not need to be provided with the UHI by another network element.

1004: The terminal device initiates random access to the target primary secondary cell.

1005: After accessing the target primary secondary cell, the terminal device continues to evaluate an execution condition trigger status of the candidate primary secondary cell.

1006: The terminal device sends fourth information to the master node.

Step 1004 to step 1006 are optional. For descriptions of step 1004 to step 1006, refer to the descriptions of step 904 to step 906 in FIG. 9. This embodiment of this application may be applied to a scenario in which a continuous CPAC feature is supported. This embodiment of this application may be used as an example of recording UHI by a network side for an R18 mobility feature (the continuous CPAC feature).

In this embodiment of this application, when receiving the fourth information, the master node sends the fifth information to the one or more candidate secondary nodes. In this way, the candidate secondary node can collect the UHI of the terminal device in the target primary secondary cell in a timely manner, and can stop collecting the UHI of the terminal device in the source primary secondary cell in a timely manner.

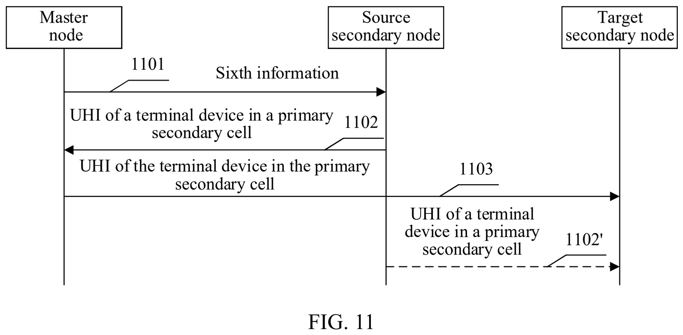

FIG. 11 is another interaction flowchart of a communication method according to an embodiment of this application. As shown in FIG. 11, the method includes the following steps.

1101: A master node sends sixth information to a source secondary node of a terminal device.

Correspondingly, the source secondary node of the terminal device receives the sixth information from the master node. The sixth information indicates the source secondary node of the terminal device to stop providing user data for the terminal device. For example, the sixth information further indicates identifier information of a target primary secondary cell that satisfies a condition and that is selected by the terminal device. In this embodiment of this application, the terminal device communicates with a plurality of base stations. A base station in the plurality of base stations that performs control plane signaling interaction with a core network is the master node, and another base station is a secondary base station, that is, a secondary node. The source secondary node is a node to which a source primary secondary cell belongs. The source primary secondary cell is a primary secondary cell the terminal device accesses before the target primary secondary cell. For example, when the master node sends the sixth information to the source secondary node of the terminal device, the terminal device is performing a procedure of being handed over from the source primary secondary cell to the target primary secondary cell or has completed handover from the source primary secondary cell to the target primary secondary cell.

1102: After receiving the sixth information, the source secondary node sends UHI of the terminal device in a primary secondary cell to the master node of the terminal device.

Correspondingly, the master node receives the UHI of the terminal device in the primary secondary cell from the source secondary node of the terminal device. Alternatively, the master node receives the UHI of the terminal device in the primary secondary cell from the source secondary node. For example, the source secondary node sends the UHI of the terminal device in the primary secondary cell to the master node of the terminal device through a secondary node SN modification request procedure. The UHI of the terminal device in the primary secondary cell may include UHI of the terminal device in the source primary secondary cell, or may include UHI of the terminal device in another previous primary secondary cell. This is not limited in this application.

1103: The master node sends the UHI of the terminal device in the primary secondary cell to a target secondary node of the terminal device.

The target secondary node is a node to which the target primary secondary cell belongs.

1102': After receiving the sixth information, the source secondary node sends UHI of the terminal device in a primary secondary cell to a target secondary node of the terminal device.

For example, the sixth information includes the identifier information of the target primary secondary cell that satisfies the condition and that is selected by the terminal device. An example of step 1102' is as follows: After receiving the sixth information, the source secondary node sends, based on the identifier information of the target primary secondary cell, the UHI of the terminal device in the primary secondary cell to the target secondary node to which the target primary secondary cell belongs.

A function of step 1102 and step 1103 is to cause the target secondary node to obtain the UHI of the terminal device in the primary secondary cell.

A function of step 1102 is also to cause the target secondary node to obtain the UHI of the terminal device in the primary secondary cell. A method procedure in FIG. 11 may include step 1102 and step 1103, and does not include step 1102'; or may include step 1102', and does not include step 1102 and step 1103.

In this embodiment of this application, after receiving the sixth information, the source secondary node sends the UHI of the terminal device in the primary secondary cell to the master node of the terminal device, or sends the UHI of the terminal device in the primary secondary cell to the target secondary node of the terminal device. In this way, the target secondary node can obtain the UHI of the terminal device in the primary secondary cell.

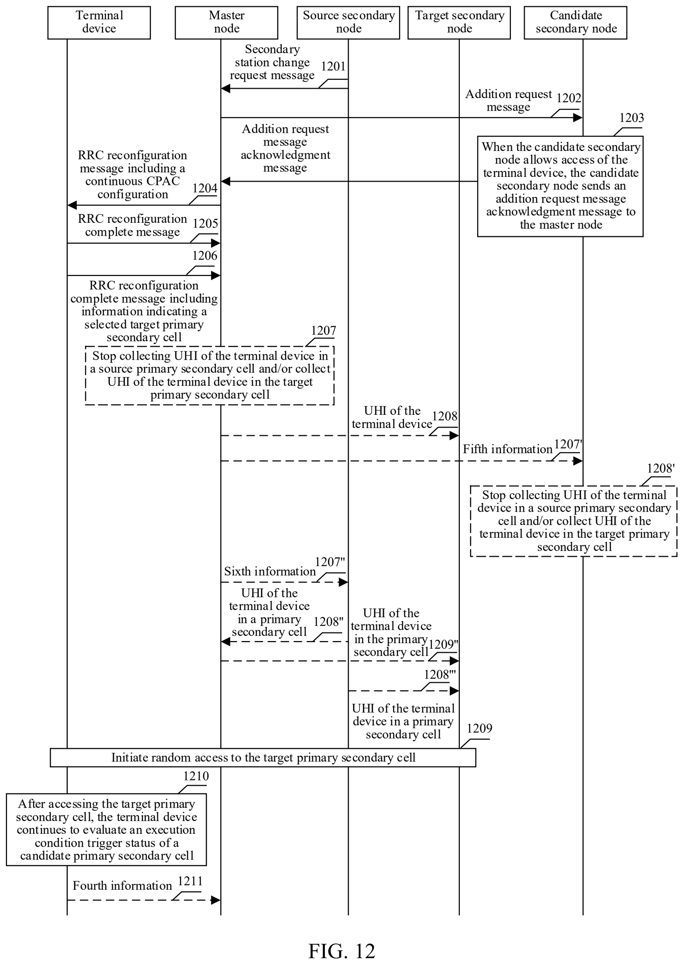

FIG. 12 is another interaction flowchart of a communication method according to an embodiment of this application. A method procedure in FIG. 12 shows possible implementations of the methods described in FIG. 9, FIG. 10, and FIG. 11. As shown in FIG. 12, the method includes the following steps.

1201: A source secondary node sends a secondary station change request message to a master node.

The secondary station change request message may carry UHI of the terminal device in a primary secondary cell. Step 1201 is optional. If a secondary node triggers a continuous CPC procedure, the source secondary node sends the secondary station change request message to the master node. If the master node triggers a CPA or CPC procedure, step 1201 is skipped, in other words, step 1202 is directly performed.

1202: The master node sends an addition request message to one or more candidate secondary nodes.

The addition request message may carry the UHI of the terminal device in the primary secondary cell.

1203: When the candidate secondary node allows access of the terminal device, the candidate secondary node sends an addition request message acknowledgment message to the master node.

The addition request message acknowledgment message indicates that the candidate secondary node allows the access of the terminal device.

1204: The master node sends an RRC reconfiguration message including a continuous CPAC configuration to the terminal device.

The continuous CPAC configuration includes configuration information of one or more candidate cells, and may further include an execution trigger condition for initial condition execution and an execution trigger condition for subsequent condition execution that correspond to the candidate cell.

1205: The terminal device sends an RRC reconfiguration complete message to the master node.

The RRC reconfiguration complete message indicates that the terminal device completes the continuous CPAC configuration.

1206: The terminal device sends, to the master node, the RRC reconfiguration complete message including and indicating a selected target primary secondary cell.

For example, the terminal device obtains, through evaluation, that one or more candidate primary secondary cells satisfy a corresponding execution trigger condition, selects one candidate primary secondary cell as the target primary secondary cell, sends, to the master node, the RRC reconfiguration complete message indicating the target primary secondary cell selected by the terminal device, and initiates random access to the target primary secondary cell. For example, the RRC reconfiguration complete message includes the foregoing fourth information. Step 1206 is an example of step 901 in FIG. 9.

1207: When the RRC reconfiguration complete message including and indicating the selected target primary secondary cell is received, the master node stops collecting UHI of the terminal device in a source primary secondary cell and/or collects UHI of the terminal device in the target primary secondary cell.

Step 1207 is an example of step 902 in FIG. 9.

1208: The master node sends UHI of the terminal device to a target secondary node.

For step 1208, refer to step 903 in FIG. 9. An example in which the master node sends the UHI of the terminal device to the target secondary node is: The master node sends, to the target secondary node, UHI of the terminal device that has been recorded (obtained) by the master node. A sequence of step 1207 and step 1208 is not limited. Step 1207 and step 1208 are optional.

Step 1207 and step 1208 are a manner in which the master node records the UHI of the terminal device in the primary secondary cell.

1207': When the RRC reconfiguration complete message including and indicating the selected target primary secondary cell is received, the master node sends fifth information to the one or more candidate secondary nodes.

Step 1207' is an example of step 1002 in FIG. 10.

1208': When receiving the fifth information, the candidate secondary node stops collecting UHI of the terminal device in a source primary secondary cell and/or collects UHI of the terminal device in the target primary secondary cell.

For example, when receiving the fifth information, the candidate secondary node stops collecting, based on the UHI in the primary secondary cell that is received in the SN addition request message in step 1202, information about a latest PSCell entry, and collects entry information of the target primary secondary cell (adds a PSCell entry) based on the fifth information. For step 1208', refer to step 1003 in FIG. 10.

Step 1207' and step 1208' are a manner in which the candidate secondary node records the UHI of the terminal device in the primary secondary cell.

1207": The master node sends sixth information to the source secondary node of the terminal device.

For step 1207", refer to step 1101 in FIG. 11.

1208": After receiving the sixth information, the source secondary node sends the UHI of the terminal device in the primary secondary cell to the master node of the terminal device.

For step 1208", refer to step 1102 in FIG. 11.

1209": The master node sends the UHI of the terminal device in the primary secondary cell to a target secondary node of the terminal device.

For step 1209", refer to step 1103 in FIG. 11. Step 1207" to step 1209" are a manner in which the source secondary node records the UHI of the terminal device in the primary secondary cell.

1208‴: After receiving the sixth information, the source secondary node sends the UHI of the terminal device in the primary secondary cell to a target secondary node of the terminal device.

For step 1208"', refer to step 1102' in FIG. 11. Step 1207" and step 1208‴ are another manner in which the source secondary node records the UHI of the terminal device in the primary secondary cell.

FIG. 12 shows four parallel manners in which the target secondary node obtains the UHI of the terminal device in the primary secondary cell. Step 1207 and step 1208, step 1207' and step 1208', step 1207" to step 1209", and step 1207" and step 1208" are four optional manners in which the target secondary node obtains the UHI of the terminal device in the primary secondary cell. The method procedure in FIG. 12 may include any one of the following: step 1207 and step 1208, step 1207' and step 1208', step 1207" to step 1209", and step 1207" and step 1208"'.

1209: The terminal device initiates random access to the target primary secondary cell.

1210: After accessing the target primary secondary cell, the terminal device continues to evaluate an execution condition trigger status of the candidate primary secondary cell.

1211: The terminal device sends fourth information to the master node.

For step 1209 to step 1211, refer to step 1004 to step 1006. Details are not described herein again.

This embodiment of this application may be applied to a scenario in which a continuous CPAC feature is supported. This embodiment of this application may be used as an example of recording UHI by a network side for an R18 mobility feature (the continuous CPAC feature).

This embodiment of this application shows manners in which the master node, the candidate secondary node, and the source secondary node record the UHI of the terminal device in the primary secondary cell, so that the network side (a target base station) can obtain and use accurate UHI information.

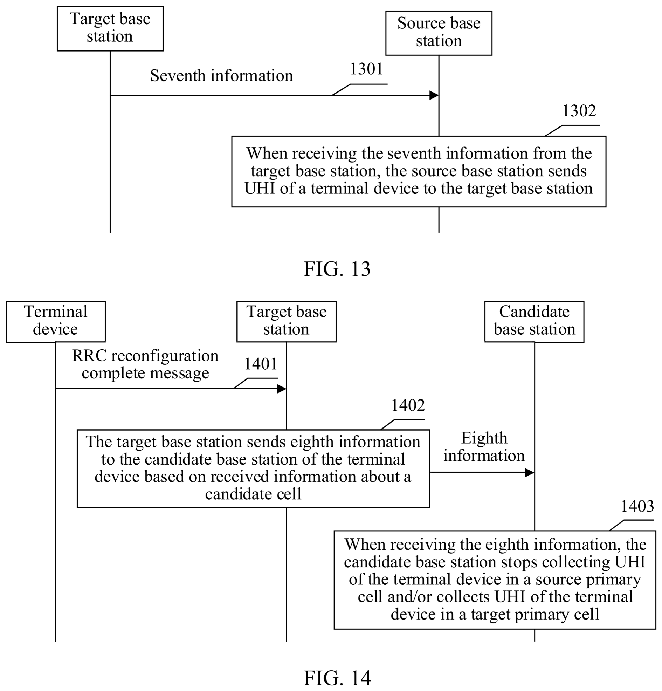

FIG. 13 is another interaction flowchart of a communication method according to an embodiment of this application. As shown in FIG. 13, the method includes the following steps.

1301: A target base station sends seventh information to a source base station.

Correspondingly, the source base station receives the seventh information from the target base station. The seventh information indicates that a terminal device is successfully handed over to the target base station. The source base station is a base station that the terminal device accesses before being handed over to the target base station. For example, after determining that the terminal device is successfully handed over to the target base station, the target base station sends the seventh information to the source base station.

1302: When receiving the seventh information from the target base station, the source base station sends UHI of the terminal device to the target base station.

For example, after sending the seventh information to the source base station, the target base station may start to collect and store the UHI of the terminal device. For example, after the terminal device is successfully handed over to a new target base station, the new target base station sends the seventh information to the target base station (a source base station). The target base station serves as the source base station of the terminal device, and sends the UHI of the terminal device to the new target base station.

In this embodiment of this application, when receiving the seventh information from the target base station, the source base station sends the UHI of the terminal device to the target base station. In this way, a network side (the target base station) can obtain and use accurate UHI information.

FIG. 14 is another interaction flowchart of a communication method according to an embodiment of this application. As shown in FIG. 14, the method includes the following steps.

1401: A terminal device sends an RRC reconfiguration complete message to a target base station.

Correspondingly, the target base station receives the RRC reconfiguration complete message from the terminal device. The RRC reconfiguration complete message indicates the terminal device to apply a configuration of a target primary cell of the target base station.

1402: The target base station sends eighth information to a candidate base station of the terminal device based on received information about a candidate cell.

The eighth information indicates that the terminal device is successfully handed over to the target primary cell. The eighth information includes identifier information of the target primary cell, and may further include identifier information of a target primary secondary cell of the terminal device.

1403: When receiving the eighth information, the candidate base station stops collecting UHI of the terminal device in a source primary cell and/or collects UHI of the terminal device in the target primary cell. Optionally, the candidate base station may further collect UHI of the terminal device in a primary secondary cell. For example, the candidate base station stops collecting UHI of the terminal device in a latest primary secondary cell and/or starts to collect UHI of the terminal device in the target primary secondary cell.

The source primary cell is a primary cell the terminal device accesses before the target primary cell. An example of step 1403 is as follows: When receiving the eighth information, the candidate base station stops collecting latest entry information of a primary cell and collects entry information of the target primary cell (adds a PCell entry). If the target PSCell exists, the candidate base station processes UHI in the primary secondary cell in a same manner.

When the candidate base station maintains the UHI of the terminal device, because the target base station is one of candidate base stations, the target base station has maintained the most accurate UHI, and does not need to be provided with UHI by another device.

In this embodiment of this application, when receiving the eighth information, the candidate base station stops collecting the UHI of the terminal device in the source primary cell and/or collects the UHI of the terminal device in the target primary cell. In this way, a network side (the target base station) can obtain and use accurate UHI information.

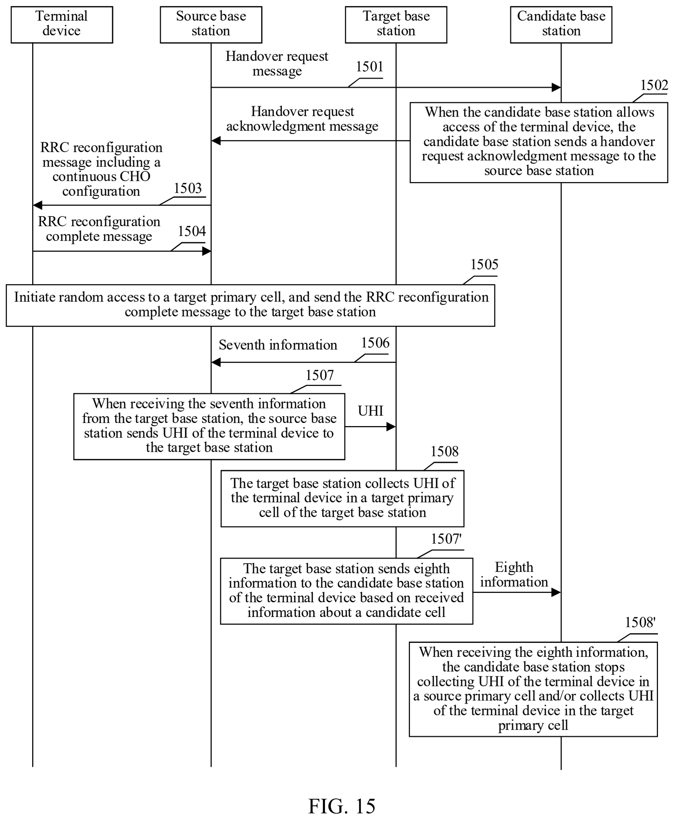

FIG. 15 is another interaction flowchart of a communication method according to an embodiment of this application. A method procedure in FIG. 15 shows possible implementations of the methods described in FIG. 13 and FIG. 14. As shown in FIG. 15, the method includes the following steps.

1501: A source base station sends a handover request message to one or more candidate base stations.

The handover request message indicates conditional handover. The handover request message may carry UHI of a terminal device. The UHI may include MCG UHI (UHI of the terminal device in a primary cell), and may further include SCG UHI (UHI of the terminal device in a primary secondary cell).

1502: When the candidate base station allows access of the terminal device, the candidate base station sends a handover request acknowledgment message to the source base station.

The handover request acknowledgment message indicates that the candidate base station allows the access of the terminal device.

1503: The source base station sends an RRC reconfiguration message including a continuous CHO configuration to the terminal device.

Correspondingly, the terminal device receives, from the source base station, the RRC reconfiguration message including the continuous CHO configuration. For example, the RRC reconfiguration message includes configuration information of one or more candidate cells, and may further include a corresponding execution trigger condition for initial CHO and continuous CHO.

Optionally, after the source base station receives the handover request acknowledgment message of the candidate base station in step 1502, and before or after the source base station delivers the RRC reconfiguration message including the continuous CHO configuration to the terminal device in step 1503, the source base station may notify the candidate base station of other candidate cell information. The candidate cell information includes at least one or more of identifier information of the candidate cell, data forwarding address information of the candidate cell, an execution trigger condition of the candidate cell, and measurement configuration information.

1504: The terminal device sends an RRC reconfiguration complete message to the source base station.

The RRC reconfiguration complete message indicates that the terminal device receives the configuration information of the one or more candidate cells.

1505: The terminal device initiates random access to a target primary cell, and sends the RRC reconfiguration complete message to a target base station.

For example, the terminal device continuously determines whether a candidate cell satisfies the execution trigger condition. When detecting that the one or more candidate cells satisfy the corresponding execution trigger condition, the terminal device selects one candidate cell as the target primary cell to initiate random access, and sends the RRC reconfiguration complete message to the target base station.

1506: The target base station sends seventh information to the source base station.

The seventh information indicates that the terminal device is successfully handed over to the target base station. For step 1506, refer to step 1301 in FIG. 13.

1507: When receiving the seventh information from the target base station, the source base station sends the UHI of the terminal device to the target base station.

For step 1506 and step 1507, refer to step 1301 and step 1302 in FIG. 13.

1508: The target base station collects UHI of the terminal device in the target primary cell of the target base station.

For example, after receiving the RRC reconfiguration complete message from the terminal device, the target base station collects the UHI of the terminal device in the target primary cell of the target base station.

1507': The target base station sends eighth information to the candidate base station of the terminal device based on received information about the candidate cell.

1508': When receiving the eighth information, the candidate base station stops collecting UHI of the terminal device in a source primary cell and/or collects UHI of the terminal device in the target primary cell.

For step 1507' and step 1508', refer to step 1402 and step 1403 in FIG. 14.

Step 1506 to step 1508 are a manner in which the target base station collects the UHI of the terminal device. Step 1507' and step 1508' are another manner in which the target base station collects the UHI of the terminal device. Step 1506 to step 1508 are optional, or step 1507' and step 1508' are optional. For example, the method procedure in FIG. 15 includes step 1506 to step 1508, and does not include step 1507' and step 1508'. For another example, the method procedure in FIG. 15 includes step 1507' and step 1508', and does not include step 1506 to step 1508.

It should be noted that the method procedure in FIG. 15 may include a plurality of steps similar to step 1506 to step 1508. Step 1506 to step 1508 are operations of causing the target base station to obtain and collect the UHI after the terminal device initiates random access to the target primary cell. After initiating random access to the target primary cell each time, the terminal device cooperates with a new source base station and a new target base station to perform step 1506 to step 1508.

In this embodiment of this application, the source base station accurately records the UHI, and sends the UHI to the target base station in a timely manner, or all candidate base stations record the UHI. In this way, a network side (the target base station) can obtain and use accurate UHI information.

The following describes, with reference to the accompanying drawings, structures of communication apparatuses that can implement the communication methods provided in embodiments of this application. The following briefly describes only the communication apparatuses. For details about solution implementation, refer to the descriptions in the foregoing method embodiments. Details are not described below again.

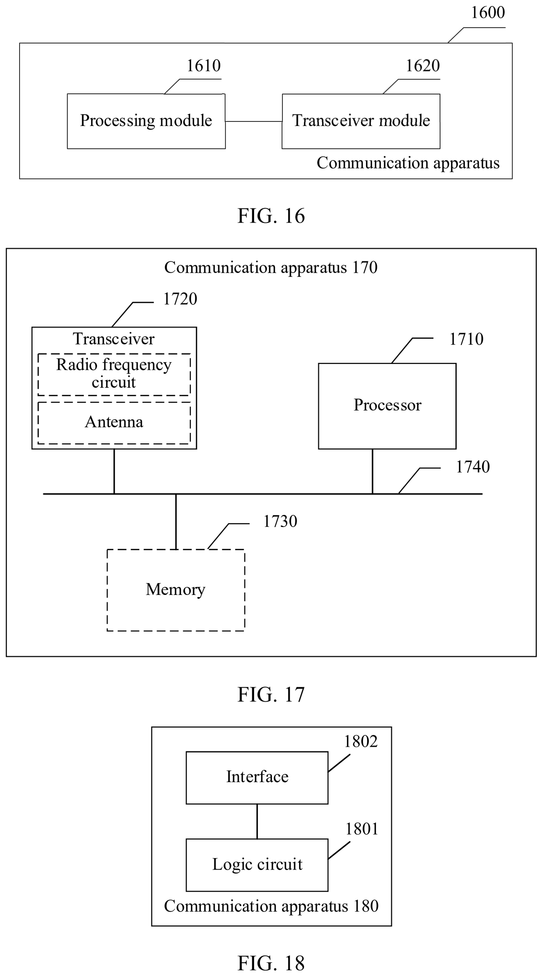

FIG. 16 is a diagram of a structure of a communication apparatus 1600 according to an embodiment of this application. The communication apparatus 1600 may correspondingly implement functions or steps implemented by the terminal device in the foregoing method embodiments, or may correspondingly implement functions or steps implemented by the CU (the source CU or the target CU) in the foregoing method embodiments, or may correspondingly implement functions or steps implemented by the primary base station in the foregoing method embodiments, or may correspondingly implement functions or steps implemented by the source base station in the foregoing method embodiments, or may correspondingly implement functions or steps implemented by the candidate secondary node in the foregoing method embodiments, or may correspondingly implement functions or steps implemented by the target base station in the foregoing method embodiments, or may correspondingly implement functions or steps implemented by the candidate base station in the foregoing method embodiments. The communication apparatus may include a processing module 1610 and a transceiver module 1620. In a possible implementation, the apparatus may further include a storage unit. The storage unit may be configured to store instructions (code or a program) and/or data. The processing module 1610 and the transceiver module 1620 may be coupled to the storage unit. For example, the processing module 1610 may read the instructions (the code or the program) and/or the data in the storage unit, to implement a corresponding method. The foregoing units may be independently disposed, or may be partially or completely integrated. For example, the transceiver module 1620 may include a sending module and a receiving module. The sending module may be a transmitter, and the receiving module may be a receiver. An entity corresponding to the transceiver module 1620 may be a transceiver, or may be a communication interface.

In some possible implementations, the communication apparatus 1600 can correspondingly implement actions and functions of the terminal device in the foregoing method embodiments. For example, the communication apparatus 1600 may be a terminal device, or may be a component (for example, a chip or a circuit) used in the terminal device. For example, the transceiver module 1620 may be configured to perform all receiving or sending operations performed by the terminal device in the foregoing embodiments, and/or configured to support another process of the technology described in this specification. The processing module 1610 is configured to perform all operations, except the receiving or sending operations, performed by the terminal device in the foregoing embodiments.

In some possible implementations, the communication apparatus 1600 can correspondingly implement actions and functions of the CU in the foregoing method embodiments. For example, the communication apparatus 1600 may be a CU, or may be a component (for example, a chip or a circuit) used in the CU. For example, the transceiver module 1620 may be configured to perform all receiving or sending operations performed by the CU in the foregoing embodiments, and/or configured to support another process of the technology described in this specification. The processing module 1610 is configured to perform all operations, except the receiving or sending operations, performed by the CU.

In some possible implementations, the communication apparatus 1600 can correspondingly implement actions and functions of the primary base station in the foregoing method embodiments. For example, the communication apparatus 1600 may be a primary base station, or may be a component (for example, a chip or a circuit) used in the primary base station. For example, the transceiver module 1620 may be configured to perform all receiving or sending operations performed by the primary base station in the foregoing embodiments, and/or configured to support another process of the technology described in this specification. The processing module 1610 is configured to perform all operations, except the receiving or sending operations, performed by the primary base station.

In some possible implementations, the communication apparatus 1600 can correspondingly implement actions and functions of the source base station in the foregoing method embodiments. For example, the communication apparatus 1600 may be a source base station, or may be a component (for example, a chip or a circuit) used in the source base station. For example, the transceiver module 1620 may be configured to perform all receiving or sending operations performed by the source base station in the foregoing embodiments, and/or configured to support another process of the technology described in this specification. The processing module 1610 is configured to perform all operations, except the receiving or sending operations, performed by the source base station.

In some possible implementations, the communication apparatus 1600 can correspondingly implement actions and functions of the target base station in the foregoing method embodiments. For example, the communication apparatus 1600 may be a target base station, or may be a component (for example, a chip or a circuit) used in the target base station. For example, the transceiver module 1620 may be configured to perform all receiving or sending operations performed by the target base station in the foregoing embodiments, and/or configured to support another process of the technology described in this specification. The processing module 1610 is configured to perform all operations, except the receiving or sending operations, performed by the target base station.

In some possible implementations, the communication apparatus 1600 can correspondingly implement actions and functions of the candidate secondary node in the foregoing method embodiments. For example, the communication apparatus 1600 may be a candidate secondary node, or may be a component (for example, a chip or a circuit) used in the candidate secondary node. For example, the transceiver module 1620 may be configured to perform all receiving or sending operations performed by the candidate secondary node in the foregoing embodiments, and/or configured to support another process of the technology described in this specification. The processing module 1610 is configured to perform all operations, except the receiving or sending operations, performed by the candidate secondary node.

In some possible implementations, the communication apparatus 1600 can correspondingly implement actions and functions of the candidate base station in the foregoing method embodiments. For example, the communication apparatus 1600 may be a candidate base station, or may be a component (for example, a chip or a circuit) used in the candidate base station. For example, the transceiver module 1620 may be configured to perform all receiving or sending operations performed by the candidate base station in the foregoing embodiments, and/or configured to support another process of the technology described in this specification. The processing module 1610 is configured to perform all operations, except the receiving or sending operations, performed by the candidate base station.

FIG. 17 is a diagram of a structure of another communication apparatus 170 according to an embodiment of this application. The communication apparatus in FIG. 17 may be the foregoing terminal device, the foregoing CU, the foregoing primary base station, the foregoing source base station, the foregoing target base station, the foregoing candidate base station, or the foregoing candidate secondary node.

As shown in FIG. 17, the communication apparatus 170 includes at least one processor 1710 and a transceiver 1720.

In some embodiments of this application, the processor 1710 and the transceiver 1720 may be configured to perform functions, operations, or the like performed by a terminal device. For example, the transceiver 1720 performs all receiving or sending operations performed by the terminal device in the foregoing embodiments. For example, the processor 1710 is configured to perform all operations, except the receiving or sending operations, performed by the terminal device in the foregoing embodiments.

In some embodiments of this application, the processor 1710 and the transceiver 1720 may be configured to perform functions, operations, or the like performed by a base station. For example, the transceiver 1720 performs all receiving or sending operations performed by the base station in the foregoing embodiments. The processor 1710 is configured to perform all operations, except the receiving or sending operations, performed by the base station. The base station may be a primary base station, a CU, a source base station, a target base station, a candidate base station, or a candidate secondary node.

The transceiver 1720 is configured to communicate with another device/apparatus via a transmission medium. The processor 1710 receives or sends data and/or signaling by using the transceiver 1720, and is configured to implement the methods in the foregoing method embodiments. The processor 1710 may implement functions of the processing module 1610, and the transceiver 1720 may implement functions of the transceiver module 1620.

For example, the transceiver 1720 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, for example, a touchscreen, a display screen, or a keyboard, is mainly configured to: receive data input by a user and output data to the user.

For example, the communication apparatus 170 may further include at least one memory 1730 configured to store program instructions and/or data. The memory 1730 is coupled to the processor 1710. The coupling in this embodiment of this application may be an indirect coupling or a communication connection between apparatuses, units, or modules in an electrical form, a mechanical form, or another form, and is used for information exchange between the apparatuses, the units, or the modules. The processor 1710 may cooperate with the memory 1730. The processor 1710 may execute the program instructions stored in the memory 1730. At least one of the at least one memory may be included in the processor.

The processor 1710 may read a software program in the memory 1730, interpret and execute instructions of the software program, and process data of the software program. When data needs to be sent in a wireless manner, the processor 1710 performs baseband processing on to-be-sent data, and then outputs a baseband signal to the radio frequency circuit. The radio frequency circuit performs radio frequency processing on the baseband signal, and then sends, through the antenna, a radio frequency signal to the outside in an electromagnetic wave form. When data is sent to the communication apparatus, the radio frequency circuit receives a radio frequency signal through the antenna, converts the radio frequency signal into a baseband signal, and outputs the baseband signal to the processor 1710. The processor 1710 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1720, the processor 1710, and the memory 1730 is not limited in this embodiment of this application. In this embodiment of this application, the memory 1730, the processor 1710, and the transceiver 1720 are connected through a bus 1740 in FIG. 17. The bus is represented by using a bold line in FIG. 17. A manner of connection between other components is merely an example for description, and is not limited thereto. The bus may include an address bus, a data bus, a control bus, and the like. For ease of representation, only one bold line is used to represent the bus in FIG. 17, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by a combination of hardware in the processor and a software module.

FIG. 18 is a diagram of a structure of another communication apparatus 180 according to an embodiment of this application. As shown in FIG. 18, the communication apparatus shown in FIG. 18 includes a logic circuit 1801 and an interface 1802. The processing module 1610 in FIG. 16 may be implemented by using the logic circuit 1801, and the transceiver module 1620 in FIG. 16 may be implemented by using the interface 1802. The logic circuit 1801 may be a chip, a processing circuit, an integrated circuit, a system on chip (system on chip, SoC) chip, or the like. The interface 1802 may be a communication interface, an input/output interface, or the like. In this embodiment of this application, the logic circuit and the interface may be coupled to each other. A specific manner of connection between the logic circuit and the interface is not limited in this embodiment of this application.

In some embodiments of this application, the logic circuit and the interface may be configured to perform function, operations, or the like performed by the foregoing terminal device end.

In some embodiments of this application, the logic circuit and the interface may be configured to perform function, operations, or the like performed by the foregoing base station. The foregoing base station may be a primary base station, a CU, a source base station, a target base station, a candidate base station, or a candidate secondary node.

This application further provides a computer-readable storage medium. The computer-readable storage medium stores a computer program or instructions. When the computer program or the instructions are run on a computer, the computer is caused to perform the methods in the foregoing embodiments.

It should be noted that a person of ordinary skill in the art can learn that all or some of the steps of the methods in the foregoing embodiments may be implemented by a program instructing related hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically erasable programmable read-only memory (Electrically Erasable Programmable Read-Only Memory, EEPROM), a compact disc read-only memory (Compact Disc read-only memory, CD-ROM) or another optical disc memory, a magnetic disk memory, a magnetic tape memory, or any other computer-readable medium that can be configured to carry or store data.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer programs or instructions are loaded and executed on a computer, all or some of procedures or functions described in embodiments of this application are performed. The computer may be a general-purpose computer, a dedicated computer, a computer network, a network device, a user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

## Claims

1. A communication method, comprising:
receiving first information from a distributed unit DU, wherein the first information indicates that a terminal device is to access a target cell; and
when a first condition is satisfied, stopping collecting user history information UHI of the terminal device in a source cell, and/or collecting UHI of the terminal device in the target cell, wherein the source cell is a cell the terminal device accesses before the target cell; and
the first condition comprises at least one of the following:
the first information is received; and second information is received, wherein the second information indicates that the terminal device successfully accesses the target cell.

2. The method according to claim 1, wherein the second information is carried in a first message, the first message is sent to a target central unit CU by a target DU accessed by the terminal device, and the target CU is a CU to which the target cell belongs; or the second information is carried in a second message, and the second message is a radio resource control RRC reconfiguration complete message sent by the terminal device.

3. The method according to claim 1 or 2, wherein the first information indicates that layer 1/layer 2-triggered mobility information indicating that the terminal device changes to the target cell has been sent to the terminal device.

4. A communication method, comprising:
receiving first information from a distributed unit DU, wherein the first information indicates that a terminal device is to access a target cell; and
when the first information is received, sending user history information UHI to a target central unit CU to which the target cell belongs, wherein a source CU of the terminal device is different from the target CU, and/or sending third information to a candidate CU to which a candidate cell of the terminal device belongs, wherein the third information indicates layer 1/layer 2-triggered information indicating the target cell to which the terminal device changes, and the source CU of the terminal device is different from the candidate CU.

5. The method according to claim 4, wherein the first information indicates that layer 1/layer 2-triggered mobility information indicating that the terminal device changes to the target cell has been sent to the terminal device.

6. A communication method, comprising:
receiving third information, wherein the third information indicates layer 1/layer 2-triggered information indicating a target cell to which a terminal device changes; and
when the third information is received, stopping collecting user history information UHI of the terminal device in a source cell, and/or starting to collect UHI of the terminal device in the target cell, wherein the source cell is a cell the terminal device accesses before the target cell.

7. A communication method, comprising:
receiving second information, wherein the second information indicates that a terminal device successfully accesses a target cell; and
when the second information is received, collecting user history information UHI of the terminal device in the target cell.

8. The method according to claim 7, wherein the second information is carried in a first message, the first message is sent to a target central unit CU by a target distributed unit DU accessed by the target cell, and the target CU is a CU to which the target cell belongs; or the second information is carried in a second message, and the second message is an RRC reconfiguration complete message sent by the terminal device.

9. The method according to claim 7 or 8, wherein the method is applied to the target CU, and the target CU is different from a CU of a source cell the terminal device accesses before the target cell.

10. A communication method, comprising:
when fourth information is received, stopping collecting user history information UHI of a terminal device in a source primary secondary cell, and/or collecting UHI of the terminal device in a target primary secondary cell, wherein the fourth information indicates the target primary secondary cell that satisfies a condition and that is selected by the terminal device; and
sending UHI of the terminal device in a primary secondary cell to a target secondary node.

11. A communication method, comprising:
when fourth information is received, sending fifth information to one or more candidate secondary nodes, wherein the fourth information indicates the target primary secondary cell that satisfies a condition and that is selected by a terminal device, the fifth information indicates the target primary secondary cell that satisfies the condition and that is selected by the terminal device, and the target primary secondary cell is one of at least one candidate primary secondary cell indicated to the terminal device.

12. A communication method, comprising:
receiving fifth information from a master node; and
when the fifth information is received, stopping collecting user history information UHI of a terminal device in a source primary secondary cell, and/or collecting UHI of the terminal device in a target primary secondary cell, wherein the fifth information indicates the target primary secondary cell that satisfies a condition and that is selected by the terminal device, and the source primary secondary cell is a primary secondary cell the terminal device accesses before the target primary secondary cell.

13. A communication method, comprising:
after sixth information is received, sending user history information UHI of a terminal device in a source primary secondary cell to a master node of the terminal device, and/or sending UHI of the terminal device in a primary secondary cell to a target secondary node of the terminal device, wherein the sixth information indicates a source secondary node of the terminal device to stop providing user data for the terminal device.

14. The method according to claim 13, wherein the sending the user history information UHI of the terminal device in the primary secondary cell to the master node of the terminal device comprises:
sending the UHI of the terminal device in the primary secondary cell to the master node of the terminal device through a secondary node SN modification request procedure.

15. The method according to claim 13, wherein the sixth information comprises identifier information of a target primary secondary cell that satisfies a condition and that is selected by the terminal device, and the sending the UHI of the terminal device in the primary secondary cell to the target secondary node of the terminal device comprises:
sending, based on the identifier information of the target primary secondary cell, the UHI of the terminal device in the primary secondary cell to the target secondary node to which the target primary secondary cell belongs.

16. A communication method, comprising:
receiving user history information UHI of a terminal device in a primary secondary cell from a source secondary node; and
sending the UHI of the terminal device in the primary secondary cell to a target secondary node.

17. The method according to claim 16, wherein before the UHI of the terminal device in the primary secondary cell is received from the source secondary node, the method further comprises:
sending sixth information to the source secondary node, wherein the sixth information indicates the source secondary node to stop providing user data for the terminal device.

18. A communication method, comprising:
when seventh information is received from a target base station, sending user history information UHI of a terminal device to the target base station, wherein the seventh information indicates that the terminal device is successfully handed over to the target base station.

19. A communication method, comprising:
sending seventh information to a source base station, wherein the seventh information indicates that a terminal device is successfully handed over to a target base station, and the source base station is a base station that the terminal device accesses before being handed over to the target base station; and
receiving user history information UHI of the terminal device from the source base station.

20. The method according to claim 19, wherein the method further comprises:
after a radio resource control RRC reconfiguration complete message is received from the terminal device, collecting UHI of the terminal device in a target primary cell of the target base station, wherein the RRC reconfiguration complete message indicates the terminal device to apply a configuration of the target primary cell.

21. A communication method, comprising:
receiving a radio resource control RRC reconfiguration complete message from a terminal device, wherein the RRC reconfiguration complete message indicates the terminal device to apply a configuration of a target primary cell; and
sending eighth information to a candidate base station of the terminal device based on received information about a candidate cell, wherein the eighth information indicates that the terminal device is successfully handed over to the target primary cell.

22. A communication method, comprising:
when eighth information is received, stopping collecting user history information UHI of a terminal device in a source primary cell, and/or collecting UHI of the terminal device in a target primary cell, wherein the eighth information indicates that the terminal device is successfully handed over to the target primary cell, and the source primary cell is a primary cell the terminal device accesses before the target primary cell.

23. The method according to claim 22, wherein the eighth information comprises at least one of identifier information of the target primary cell and identifier information of a target primary secondary cell of the terminal device.

24. A communication apparatus, comprising a module or a unit configured to implement the method according to any one of claims 1 to 23.

25. A communication apparatus, comprising a processor, wherein the processor is coupled to a memory, the memory stores computer program instructions, and the processor is configured to execute the computer program instructions, to cause the communication apparatus to perform the method according to any one of claims 1 to 23.

26. A chip, comprising:
a communication interface, configured to send and receive a signal of the chip; and
a processor, configured to execute computer program instructions, to cause a communication apparatus comprising the chip to perform the method according to any one of claims 1 to 23.

27. A computer-readable storage medium, wherein the computer-readable storage medium stores a computer program, the computer program comprises program instructions, and when the program instructions are executed, a computer is caused to perform the method according to any one of claims 1 to 23.

28. A computer program product, wherein when the computer program product runs on a computer, the computer is caused to perform the method according to any one of claims 1 to 23.
